(19) **Europäisches Patentamt / European Patent Office / Office européen des brevets**

(11) **EP 4 454 896 A1**

(12) # EUROPEAN PATENT APPLICATION
published in accordance with Art. 153(4) EPC

(43) Date of publication:
**30.10.2024 Bulletin 2024/44**

(21) Application number: **22911028.3**

(22) Date of filing: **14.12.2022**

(51) International Patent Classification (IPC):
***B41M 5/00*** *(2006.01)*   ***C09D 11/322*** *(2014.01)*
***C09D 11/54*** *(2014.01)*

(52) Cooperative Patent Classification (CPC):
**B41M 5/00; C09D 11/322; C09D 11/54**

(86) International application number:
**PCT/JP2022/046032**

(87) International publication number:
**WO 2023/120320 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.12.2021 JP 2021207250**

(71) Applicant: FUJIFILM Corporation
**Tokyo 106-8620 (JP)**

(72) Inventors:
• **KARIYA, Toshihiro**
  **Ashigarakami-gun, Kanagawa 258-8577 (JP)**
• **IKOSHI, Masao**
  **Ashigarakami-gun, Kanagawa 258-8577 (JP)**
• **MIYATO, Takeshi**
  **Ashigarakami-gun, Kanagawa 258-8577 (JP)**
• **SATO, Ayato**
  **Ashigarakami-gun, Kanagawa 258-8577 (JP)**

(74) Representative: **Klunker IP**
**Patentanwälte PartG mbB**
**Destouchesstraße 68**
**80796 München (DE)**

(54) **IMAGE RECORDING METHOD AND METHOD FOR MANUFACTURING LAMINATE**

(57)   Provided are an image recording method that enables recording of an image having excellent lamination strength with respect to a base material for lamination, and applications thereof. The image recording method includes a step of preparing a white ink containing a white pigment and at least one base ink having a hue different from a hue of the white ink, a step of applying the base ink onto a base material to form an underlying layer, and a step of applying the white ink to a surface of the underlying layer using an ink jet recording method to form a white ink layer, in which a surface energy of the underlying layer is greater than a surface tension of the white ink.

EP 4 454 896 A1

**Description**

**BACKGROUND OF THE INVENTION**

1. Field of the Invention

The present disclosure relates to an image recording method and a method of producing a laminate.

2. Description of the Related Art

In the related art, various examinations have been conducted on image recording carried out using an ink.
For example, JP2009-83325A discloses an image forming method including an undercoat liquid applying step of applying a substantially transparent undercoat liquid, which has a function of preventing an aggregation reaction of a coloring material contained in an ink liquid, to an image forming body to form an undercoat layer on the image forming body, an ink liquid droplet jetting step of forming the ink liquid into liquid droplets and jetting the liquid droplets to the image forming body on which the undercoat layer has been formed based on image data, a treatment liquid applying step of applying a treatment liquid, which causes the aggregation reaction of the ink liquid, to the image forming body after the ink liquid droplet jetting step, and a solvent removing step of removing liquid solvents of the undercoat liquid, the ink liquid, and the treatment liquid on the image forming body after the treatment liquid applying step.

**SUMMARY OF THE INVENTION**

An image to be recorded is required to have adhesiveness to various base materials depending on the usage aspect.
A laminate may be produced by recording an image on a base material to obtain an image recorded material and laminating a base material for lamination on the image in the image recorded material. Further, the image recorded material and the base material for lamination are required to have improved lamination strength.
The present disclosure has been made in consideration of the above-described circumstances, and an object to be achieved by an embodiment of the present disclosure is to provide an image recording method which enables recording of an image having excellent lamination strength with respect to a base material for lamination.
An object to be achieved by another embodiment of the present disclosure is to provide a method of producing a laminate, which enables production of a laminate having excellent lamination strength with respect to a base material for lamination.
The present disclosure includes the following aspects.

<1> An image recording method comprising: a step of preparing a white ink containing a white pigment and at least one base ink having a hue different from a hue of the white ink; a step of applying the base ink onto a base material to form an underlying layer; and a step of applying the white ink to a surface of the underlying layer using an ink jet recording method to form a white ink layer, in which a surface energy of the underlying layer is greater than a surface tension of the white ink.
<2> The image recording method according to <1>, in which at least one of base inks is a first base ink containing an aggregating agent, the step of forming the underlying layer includes a step of applying the first base ink onto the base material to form a first underlying layer, the step of forming the white ink layer includes a step of applying the white ink to a surface of the first underlying layer using the inkjet recording method, and a surface energy of the first underlying layer is in a range of 45 mN/m to 85 mN/m.
<3> The image recording method according to <1> or <2>, in which at least one of base inks is a second base ink containing a colorant other than the white pigment, the step of forming the underlying layer includes a step of applying the second base ink onto the base material to form a second underlying layer, the step of forming the white ink layer includes a step of applying the white ink to a surface of the second underlying layer using the ink jet recording method, and a surface energy of the second underlying layer is in a range of 45 mN/m to 55 mN/m.
<4> The image recording method according to <3>, in which both the second base ink and the white ink have a surface tension of 40 mN/m or less.
<5> The image recording method according to <3> or <4>, in which the step of forming the underlying layer and the step of forming the white ink layer are performed in this order, and the step of forming the underlying layer further includes a step of drying the second base ink.
<6> The image recording method according to any one of <3> to <5>, in which the second base ink does not contain an organic solvent having an SP value of 24 $MPa^{1/2}$ or less or a content of the organic solvent having an SP value of 24 $MPa^{1/2}$ or less is greater than 0% by mass and 5% by mass or less with respect to a total amount of the second base ink.

<7> The image recording method according to any one of <1> to <6>, in which a residual amount of a liquid component contained in the underlying layer is 0.1 g/m$^2$ or less at a time point at which the step of forming the white ink layer is started.

<8> The image recording method according to any one of <1> to <7>, in which a difference between the surface energy of the underlying layer and the surface tension of the white ink is in a range of 10 mN/m to 20 mN/m.

<9> The image recording method according to any one of <1> to <8>, in which a surface energy of the white ink layer is in a range of 45 mN/m to 55 mN/m.

<10> A method of producing a laminate comprising: a step of obtaining an image recorded material which includes the base material and an image disposed on the base material using the image recording method according to any one of <1> to <9>; and a step of laminating a base material for lamination on a side of the image recorded material where the image is disposed to obtain a laminate.

According to an embodiment of the present disclosure, it is possible to provide an image recording method which enables recording of an image having excellent lamination strength with respect to a base material for lamination.

According to another embodiment of the present disclosure, it is possible to provide a method of producing a laminate, which enables production of a laminate having excellent lamination strength with respect to a base material for lamination.

## DESCRIPTION OF THE PREFERRED EMBODIMENTS

Hereinafter, an image recording method and a method of producing a laminate according to the present disclosure will be described in detail.

A numerical range described using "to" in the present disclosure means a range that includes numerical values written before and after "to" as a minimum value and a maximum value, respectively.

In a numerical range described in a stepwise manner in the present specification, an upper limit or a lower limit described in a certain numerical range may be replaced with an upper limit or a lower limit in another numerical range described in a stepwise manner. Further, in a numerical range described in the present disclosure, an upper limit or a lower limit described in a certain numerical range may be replaced with a value described in an example.

In the present disclosure, in a case where a plurality of substances corresponding to each component in a composition are present, the amount of each component in the composition denotes the total amount of the plurality of substances present in the composition, unless otherwise specified.

In the present disclosure, a combination of two or more preferable aspects is a more preferable aspect.

In the present disclosure, the term "step" includes not only an independent step but also a step that cannot be clearly distinguished from other steps, as long as the intended purpose of the step is achieved.

In the present disclosure, the term "image" denotes an entire film formed by applying a base ink and a white ink in this order, and the term "image recording" denotes formation of an image (that is, the film).

Further, the concept of "image" in the present disclosure also includes a solid image.

In the present disclosure, the concept of "(meth)acrylate" includes both acrylate and methacrylate. Further, the concept "(meth)acryl" includes both acryl and methacryl.

In the present disclosure, the description of "applying an ink on a base material" includes an aspect of directly applying the ink to a surface of the base material and an aspect of directly applying the ink to a surface of a layer A, for example, in a case where the layer A is formed on the base material.

[Image recording method]

An image recording method according to the present disclosure includes a step of preparing a white ink containing a white pigment and at least one base ink different from the white ink (hereinafter, also referred to as "preparing step"), a step of applying the base ink onto a base material to form an underlying layer (hereinafter, also referred to as "underlying layer forming step"), and a step of applying the white ink to a surface of the underlying layer using an ink jet recording method to form a white ink layer (hereinafter, also referred to as "white ink layer forming step"), in which a surface energy of the underlying layer is greater than a surface tension of the white ink.

According to the image recording method of the present disclosure, an image recorded material including a base material and an image recorded on the base material and having excellent lamination strength in a case where a base material for lamination is laminated on the image can be obtained.

Here, the lamination strength denotes peel strength in a case of peeling the base material for lamination and the image recorded material from the laminate formed by lamination [that is, the laminate having a laminated structure of "base material for lamination/image recorded material" (specifically, a laminated structure of "base material for lamination/image/base material")].

The reason why the above-described effect is exhibited by the image recording method of the present disclosure is assumed as follows.

In order to improve the lamination strength in the laminate, first, it is necessary to improve the adhesiveness between the base material and the underlying layer and the adhesiveness between the underlying layer and the white ink layer, and also necessary to improve the adhesiveness between the image (particularly, the white ink layer) and the base material for lamination.

According to the image recording method of the present disclosure, an image is recorded by applying the base ink and the white ink in this order onto the base material. In the related art, in a case where a white ink is applied to the surface of the underlying layer to form a white ink layer, the adhesiveness between the underlying layer and the white ink layer tends to decrease. On the contrary, in the image recording method according to the present disclosure, the surface energy of the underlying layer is greater than the surface tension of the white ink. Therefore, the white ink is likely to wet and spread on the surface of the underlying layer, the adhesiveness between the underlying layer and the white ink layer is excellent, and as a result, an image recorded material with excellent lamination strength can be obtained.

Meanwhile, JP2009-83325A has not focused on the relationship between the surface energy of the underlying layer and the surface tension of the white ink.

Hereinafter, each step of the image recording method according to the present disclosure will be described.

<Preparing step>

The image recording method of the present disclosure includes a step of preparing a white ink containing a white pigment and at least one base ink having a hue different from the hue of the white ink.

[White ink]

(White pigment)

The white ink prepared in the preparing step contains a white pigment.

The white pigment may be a pigment exhibiting a white color, and the kind thereof is not particularly limited. The white color denotes a color with no absorption of a specific wavelength or with less absorption of a specific wavelength. Examples of the white pigment include inorganic pigments such as titanium oxide, strontium titanate, barium titanate, zinc oxide, magnesium oxide, zirconium oxide, aluminum oxide, barium sulfate, silica, talc, mica, aluminum hydroxide, calcium silicate, aluminum silicate, and zinc sulfide. The white pigment is preferably particles having titanium atoms and more preferably titanium oxide.

The average particle diameter of the white pigment is preferably in a range of 10 nm to 550 nm, more preferably in a range of 100 nm to 450 nm, and still more preferably in a range of 150 nm to 400 nm. The color reproducibility is enhanced in a case where the average particle diameter is 550 nm or less, and the jetting stability is enhanced in a case where an image is recorded by an inkjet recording method. Further, the light resistance is enhanced in a case where the average particle diameter is 10 nm or greater. Further, the particle size distribution of the pigment is not particularly limited, and any of wide particle size distribution or monodisperse particle size distribution may be used. Further, the average particle diameter and the particle size distribution of the pigment are determined by measuring the volume average particle diameter with a particle size distribution measuring device, for example, "NANOTRAC UPA-EX150" (trade name, manufactured by Nikkiso Co., Ltd.) using a dynamic light scattering method. In a case where the pigment is coated with the pigment dispersing agent, the average particle diameter of the pigment denotes the average particle diameter of the pigment coated with the pigment dispersing agent.

From the viewpoint of the covering property, the content of the white pigment is preferably in a range of 5% by mass to 20% by mass and more preferably in a range of 8% by mass to 15% by mass with respect to the total amount of the white ink.

(Water)

It is preferable that the white ink prepared in the preparing step contains water. The content of water is not particularly limited, and is, for example, in a range of 40% by mass to 70% by mass with respect to the total amount of the white ink.

(Pigment dispersing agent)

It is preferable that the white ink prepared in the preparing step contains a pigment dispersing agent. In the present disclosure, the pigment dispersing agent has a function of dispersing the pigment. The pigment dispersing agent is adsorbed on the surface of the pigment and applied to at least a part of the surface of the pigment, and thus the pigment can be dispersed in water. Further, in a case where a self-dispersing pigment that can be dispersed in water even in the absence of a pigment dispersing agent is used as the white pigment, the white ink may not contain a pigment dispersing agent.

The form of the pigment dispersing agent contained in the white ink is not particularly limited and may be any of a random polymer, a block polymer, or a graft polymer. Further, the pigment dispersing agent contained in the white ink may be a polymer having a crosslinking structure. Among the forms, the pigment dispersing agent contained in the white ink is preferably a polymer having a crosslinking structure or a block polymer and more preferably a block polymer. It is considered that in a case where the pigment dispersing agent is a polymer having a crosslinking structure or a block polymer, the pigment dispersing agent is unlikely to be released from the surface of the white pigment, and thus the dispersion stability of the white pigment is high. For example, in a case where the first base ink containing an aggregating agent is used as the base ink, since the white pigment is uniformly aggregated in a case where the white ink reacts with the aggregating agent contained in the first base ink, an image is uniform, the organic solvent is likely to be volatilized, and the lamination strength is further improved. Further, even in a case where the first base ink is not used, the proportion of the solvent in the white ink increases in the process in which water is volatilized after the white ink has landed on the underlying layer, and the dispersion of the white pigment is likely to be destabilized. Here, in a case where the pigment dispersing agent is a polymer having a crosslinking structure or a block polymer, non-uniform aggregation of the white pigment is suppressed, the image is uniform, the organic solvent is likely to volatilize, and the lamination strength is further improved.

In the present disclosure, the polymer denotes a compound having a weight-average molecular weight of 1,000 or greater.

In the present disclosure, the weight-average molecular weight (Mw) denotes a value measured by gel permeation chromatography (GPC). The measurement according to gel permeation chromatography (GPC) is performed using HLC (registered trademark)-8020GPC (manufactured by Tosoh Corporation) as a measuring device, three columns of TSKgel (registered trademark) Super Multipore HZ-H (manufactured by Tosoh Corporation, 4.6 mmID $\times$ 15 cm), and tetrahydrofuran (THF) as an eluent. Further, the measurement is performed under measurement conditions of a sample concentration of 0.45% by mass, a flow rate of 0.35 ml/min, a sample injection volume of 10 $\mu$l, and a measurement temperature of 40°C using an RI detector. Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

- Polymer having crosslinking structure -

The polymer having a crosslinking structure is not particularly limited as long as the polymer is a polymer having at least one crosslinking structure in a molecule.

Whether or not the polymer contained in the ink has a crosslinking structure can be determined, for example, by the following method. First, the polymer is separated from the ink by a separation method such as solvent extraction. The presence or absence of the crosslinking structure can be comprehensively determined by analyzing the separated polymer using various analysis methods such as a nuclear magnetic resonance method (NMR), an infrared spectroscopy method (IR), and a thermal analysis method.

The polymer having a crosslinking structure (hereinafter, also referred to as "crosslinked polymer") is formed, for example, by crosslinking an uncrosslinked polymer (hereinafter, also referred to as "uncrosslinked polymer") with a crosslinking agent. It is preferable that the uncrosslinked polymer is a water-soluble polymer.

In the present disclosure, the term "water-soluble" indicates a property in which 1 g or greater of a substance is dissolved in 100 g of water at 25°C. As the term "water-soluble" property, a property in which 3 g or greater (more preferably 10 g or greater) of a substance is dissolved in 100 g of water at 25°C is preferable.

Even in a case where the uncrosslinked polymer is water-soluble, the crosslinked polymer is not necessarily water-soluble.

Examples of the uncrosslinked polymer include a vinyl resin, an acrylic resin, a urethane resin, and a polyester resin. Among these, an acrylic resin is preferable as the uncrosslinked polymer.

It is preferable that the uncrosslinked polymer is a polymer containing a functional group that can be crosslinked by a crosslinking agent. Examples of the crosslinkable functional group include a carboxy group or a salt thereof, an isocyanate group, and an epoxy group. Among these, from the viewpoint of improving the dispersibility of the pigment, a carboxy group or a salt thereof is preferable, and a carboxy group is particularly preferable as the crosslinkable functional group. That is, a polymer containing a carboxy group is preferable as the uncrosslinked polymer.

It is preferable that the uncrosslinked polymer is a copolymer having a structural unit derived from a monomer containing a carboxy group (hereinafter, referred to as "carboxy group-containing monomer"). The structural unit derived from a carboxy group-containing monomer contained in a copolymer may be used alone or two or more kinds thereof. The copolymer may be a random copolymer or a block copolymer, but is preferably a random copolymer.

Examples of the carboxy group-containing monomer include (meth)acrylic acid, β-carboxyethyl acrylate, fumaric acid, itaconic acid, maleic acid, and crotonic acid.

From the viewpoints of the crosslinking properties and the dispersibility, (meth)acrylic acid or β-carboxyethyl acrylate is preferable, and (meth)acrylic acid is more preferable as the carboxy group-containing monomer.

The content of the structural unit derived from a carboxy group-containing monomer is preferably in a range of 5% by mass to 40% by mass, more preferably in a range of 10% by mass to 35% by mass, and still more preferably in a range of 10% by mass to 30% by mass with respect to the total amount of the uncrosslinked polymer.

It is preferable that the uncrosslinked polymer has a structural unit derived from a hydrophobic monomer in addition to the structural unit derived from a carboxy group-containing monomer. The structural unit derived from a hydrophobic monomer contained in the copolymer may be used alone or two or more kinds thereof.

Examples of the hydrophobic monomer include (meth)acrylate containing an alkyl group having 1 to 20 carbon atoms, (meth)acrylate having an aromatic ring (such as benzyl (meth)acrylate or phenoxyethyl (meth)acrylate), styrene, and a styrene derivative.

The content of the structural unit derived from a hydrophobic monomer is preferably in a range of 60% by mass to 95% by mass, more preferably in a range of 65% by mass to 90% by mass, and still more preferably in a range of 70% by mass to 90% by mass with respect to the total amount of the uncrosslinked polymer.

The uncrosslinked polymer is preferably a random copolymer having a structural unit derived from a carboxy group-containing monomer and at least one of a structural unit derived from a (meth)acrylate containing an alkyl group having 1 to 20 carbon atoms or a structural unit derived from a (meth)acrylate having an aromatic ring, more preferably a random copolymer having a structural unit derived from (meth)acrylic acid and a structural unit derived from a (meth)acrylate having an aromatic ring, and still more preferably a copolymer having a structural unit derived from (meth)acrylic acid and a structural unit derived from benzyl (meth)acrylate.

The weight-average molecular weight (Mw) of the uncrosslinked polymer is not particularly limited, but is preferably in a range of 3,000 to 300,000, more preferably in a range of 5,000 to 200,000, and still more preferably in a range of 7,000 to 100,000 from the viewpoint of the dispersibility of the white pigment.

The preferable ranges of the weight-average molecular weight of the crosslinked polymer are the same as the preferable ranges of the weight-average molecular weight of the uncrosslinked polymer.

It is preferable that the crosslinking agent used in a case of crosslinking the uncrosslinked polymer is a compound having two or more reaction sites with the uncrosslinked polymer (for example, a polymer containing a carboxy group). The crosslinking agent may be used alone or in combination of two or more kinds thereof.

As a combination of the crosslinking agent and the uncrosslinked polymer, a combination of a compound containing two or more epoxy groups (that is, a bi- or higher functional epoxy compound) and a polymer containing a carboxy group is preferable. In this combination, a crosslinking structure is formed by the reaction between the epoxy group and the carboxy group. It is preferable that the crosslinking structure is formed by the crosslinking agent after the pigment is dispersed by the uncrosslinked polymer.

Examples of the bi- or higher functional epoxy compound include ethylene glycol diglycidyl ether, polyethylene glycol diglycidyl ether, 1,6-hexanediol diglycidyl ether, diethylene glycol diglycidyl ether, polyethylene glycol diglycidyl ether, dipropylene glycol diglycidyl ether, polypropylene glycol diglycidyl ether, and trimethylolpropane triglycidyl ether.

Among these, polyethylene glycol diglycidyl ether, diethylene glycol diglycidyl ether, or trimethylolpropane triglycidyl ether is preferable as the bi- or higher functional epoxy compound.

Commercially available products may be used as the crosslinking agent.
Examples of the commercially available products include Denacol EX-321, EX-821, EX-830, EX-850, and EX-851 (manufactured by Nagase ChemteX Corporation).

From the viewpoints of the crosslinking reaction rate and the dispersion stability after crosslinking, the molar ratio between a reaction site (for example, an epoxy group) in the crosslinking agent and a reaction site (for example, a carboxy group) in the uncrosslinked polymer is preferably in a range of 1:1.1 to 1:10, more preferably in a range of 1:1.1 to 1:5, and still more preferably in a range of 1: 1.1 to 1:3.

- Block polymer -

The block polymer is also referred to as a block copolymer, and is a copolymer in which at least two polymers are bonded to each other in a molecule.

It is preferable that the block polymer has a structural unit derived from a hydrophobic monomer and a structural unit derived from a monomer containing an anionic group (hereinafter, referred to as "anionic group-containing monomer").

The structural unit derived from a hydrophobic monomer contained in the block polymer may be used alone or two or more kinds thereof. The structural unit derived from an anionic group-containing monomer contained in the block polymer may be used alone or two or more kinds thereof.

Examples of the structural unit derived from a hydrophobic monomer include an ethylenically unsaturated compound having an aromatic ring structure or an alicyclic structure and a (meth)acrylate containing an alkyl group having 1 to 20 carbon atoms.

The content of the structural unit derived from a hydrophobic monomer is preferably in a range of 35% by mass to 95% by mass, more preferably in a range of 50% by mass to 95% by mass, and still more preferably in a range of 70% by mass to 90% by mass with respect to the total amount of the block polymer.

From the viewpoint of the adsorptivity to the pigment, the hydrophobic monomer contains preferably an ethylenically unsaturated compound having an aromatic ring structure or an alicyclic structure, more preferably an ethylenically unsaturated compound having an alicyclic structure, and still more preferably an ethylenically unsaturated compound having an alicyclic structure having 6 or more carbon atoms.

The content of the structural unit derived from the ethylenically unsaturated compound having an aromatic ring structure or an alicyclic structure is preferably in a range of 10% by mass to 90% by mass, more preferably in a range of 20% by mass to 80% by mass, still more preferably in a range of 30% by mass to 70% by mass, and even still more preferably in a range of 30% by mass to 60% by mass with respect to the total amount of the block polymer.

It is also preferable that the structural unit derived from the hydrophobic monomer contains a (meth)acrylate containing an alkyl group having 1 to 20 carbon atoms. The alkyl group may be any of linear or branched.

Examples of the (meth)acrylate containing an alkyl group having 1 to 20 carbon atoms include methyl (meth)acrylate, ethyl (meth)acrylate, n-propyl (meth)acrylate, n-butyl (meth)acrylate, 2-ethylhexyl (meth)acrylate, and octyl (meth)acrylate.

The content of the structural unit derived from a (meth)acrylate containing an alkyl group having 1 to 20 carbon atoms is preferably in a range of 10% by mass to 90% by mass, more preferably in a range of 20% by mass to 80% by mass, still more preferably in a range of 30% by mass to 70% by mass, and particularly preferably in a range of 40% by mass to 60% by mass with respect to the total amount of the block polymer.

Examples of the anionic group in the structural unit derived from an anionic group-containing monomer include a carboxy group, a salt of the carboxy group, a sulfo group, a salt of the sulfo group, a phosphoric acid group, a salt of the phosphoric acid group, a phosphonic acid group, and a salt of the phosphonic acid group.

Examples of the counterion in a salt include an alkali metal ion such as a sodium ion, a potassium ion, or a lithium ion, an alkaline earth metal ion such as a calcium ion or a magnesium ion, and an ammonium ion.

Among these, a carboxy group or a salt of the carboxy group is preferable as the anionic group. Examples of the anionic group-containing monomer include (meth)acrylic acid, $\beta$-carboxyethyl acrylate, fumaric acid, itaconic acid, maleic acid, and crotonic acid. Among these, (meth)acrylic acid is preferable as the anionic group-containing monomer.

The content of the structural unit derived from the anionic group-containing monomer is preferably in a range of 1% by mass to 30% by mass, more preferably in a range of 2% by mass to 25% by mass, and still more preferably in a range of 3% by mass to 20% by mass with respect to the total amount of the block polymer.

Whether or not the polymer contained in the ink is a block polymer can be determined by, for example, the following method. First, the polymer is separated from the ink by a separation method such as solvent extraction. The physical properties such as the glass transition temperature are measured by performing analysis on the separated polymer using various analysis methods such as a nuclear magnetic resonance method (NMR), an infrared spectroscopy method (IR), and a thermal analysis method, and thus it is possible to comprehensively determine whether or not the polymer is a block polymer.

The weight-average molecular weight (Mw) of the block polymer is not particularly limited, but is preferably in a range of 3,000 to 100,000, more preferably in a range of 5,000 to 80,000, and still more preferably in a range of 10,000 to 60,000 from the viewpoint of the dispersibility of the pigment.

The mixing ratio between the white pigment and the pigment dispersing agent is preferably in a range of 1:0.02 to 1:2, more preferably in a range of 1:0.03 to 1:1.5, and still more preferably in a range of 1:0.04 to 1:1 in terms of the mass.

As a dispersion apparatus for dispersing the pigment, a known dispersion apparatus can be used, and examples thereof include a ball mill, a sand mill, a beads mill, a roll mill, a jet mill, a paint shaker, an attritor, an ultrasonic disperser, and a disper.

(Resin particles)

From the viewpoint of improving the lamination strength of the image recorded material, it is preferable that the white ink prepared in the preparing step contains at least one kind of resin particles. It is preferable that the white ink contains resin particles which are particles consisting of a resin, in addition to the pigment dispersing agent.

In a case where the white ink is applied onto the base material onto which the first base ink has been applied, the aggregating agent contained in the first base ink comes into contact with the resin particles contained in the white ink and destabilizes the dispersion of the resin particles, and thus the viscosity of the white ink is increased. In this manner, the white ink is fixed on the base material, and the lamination strength of the image recorded material is improved.

It is preferable that the resin constituting the resin particles is a water-insoluble polymer. The term "water-insoluble" in the water-insoluble polymer denotes a property that the amount of the polymer to be dissolved in 100 g of distilled water at 25°C is less than 2 g.

The resin particles include preferably at least one of particles consisting of an acrylic resin (hereinafter, referred to as "acrylic resin particles") or particles consisting of a urethane resin (hereinafter, also referred to as "urethane resin particles") and preferably acrylic resin particles.

It is preferable that the resin particles are self-dispersing resin particles.

Examples of the self-dispersing resin particles include resin particles described in paragraphs 0062 to 0076 of JP2016-188345A and paragraphs 0109 to 0140 of WO2013/180074A.

The weight-average molecular weight (Mw) of the resin in the resin particles is preferably in a range of 1,000 to 300,000, more preferably in a range of 2,000 to 200,000, and still more preferably in a range of 5,000 to 100,000.

From the viewpoint of the jetting stability, the average particle diameter of the resin particles is preferably in a range of 1 nm to 200 nm, more preferably in a range of 3 nm to 200 nm, and still more preferably in a range of 5 nm to 50 nm. Further, the average particle diameter of the resin particles is determined by measuring the volume average particle diameter with a particle size distribution measuring device, for example, "NANOTRAC UPA-EX150" (trade name, manufactured by Nikkiso Co., Ltd.) using a dynamic light scattering method.

In a case where the white ink contains resin particles, the content of the resin particles is preferably in a range of 0.1% by mass to 15% by mass, more preferably in a range of 0.5% by mass to 10% by mass, still more preferably in a range of 1% by mass to 8% by mass, and even still more preferably in a range of 2% by mass to 5% by mass with respect to the total amount of the white ink.

(Surfactant)

From the viewpoint of improving jetting stability, it is preferable that the white ink may contain at least one surfactant. Further, in order to control the surface tension of the white ink to be less than the surface energy of the underlying layer, it is preferable to appropriately adjust the kind and the content of the surfactant.

The surfactant may be any of an anionic surfactant, a cationic surfactant, an amphoteric surfactant, a nonionic surfactant, or a betaine-based surfactant. Further, the surfactant may be a fluorine-based surfactant or a silicone-based surfactant.

Among these, from a viewpoint of improving jetting stability, the white ink contains preferably a nonionic surfactant and more preferably an acetylene glycol-based surfactant as the surfactant. Particularly, from the viewpoint of setting the surface tension of the white ink to be less than the surface energy of the underlying layer, the white ink contains preferably a silicone-based surfactant and more preferably a combination of an acetylene glycol-based surfactant and a silicone-based surfactant as the surfactant.

Examples of the acetylene glycol-based surfactant include 2,4,7,9-tetramethyl-5-decyne-4,7-diol and an alkylene oxide adduct of 2,4,7,9-tetramethyl-5-decyne-4,7-diol.

Examples of a commercially available product of the acetylene glycol-based surfactant include SURFYNOL Series such as SURFYNOL 104 (manufactured by Nissin Chemical Co., Ltd.) and E series such as OLFINE E1010 (manufactured by Nissin Chemical Co., Ltd.).

Examples of the silicone-based surfactant include a polysiloxane compound. A modified polysiloxane compound obtained by introducing an organic group into some methyl groups of dimethylpolysiloxane is preferable as the silicone-based surfactant. Examples of the modification include polyether modification, methylstyrene modification, alcohol modification, alkyl modification, aralkyl modification, fatty acid ester modification, epoxy modification, amine modification, amino modification, and mercapto modification. A plurality of kinds of organic groups may be introduced into some methyl groups of the dimethylpolysiloxane. Among the examples, from the viewpoint of alkali peeling properties and jetting stability, a polyether-modified polysiloxane compound is preferable as the silicone-based surfactant.

The content of the surfactant is preferably in a range of 0.05% by mass to 4.0% by mass, more preferably in a range of 0.1% by mass to 2.0% by mass, and still more preferably in a range of 0.5% by mass to 1.5% by mass with respect to the total amount of the white ink.

The content of the acetylene glycol-based surfactant is preferably in a range of 0.1% by mass to 2.0% by mass, more preferably in a range of 0.2% by mass to 1.0% by mass, and still more preferably in a range of 0.3% by mass to 1.0% by mass with respect to the total amount of the white ink.

The content of the silicone-based surfactant is preferably in a range of 0.1% by mass to 2.0% by mass, more preferably in a range of 0.2% by mass to 1.0% by mass, and still more preferably in a range of 0.3% by mass to 1.0% by mass with respect to the total amount of the white ink.

(Additive)

The white ink prepared in the preparing step may contain additives such as a co-sensitizer, an ultraviolet absorbing agent, an antioxidant, a fading inhibitor, a conductive salt, and a basic compound, as necessary.

(Physical properties)

From the viewpoint of improving the jetting stability, the pH of the white ink is preferably in a range of 7 to 10 and more preferably in a range of 7.5 to 9.5. The pH can be measured at 25°C using a pH meter, for example, a pH meter (model number "HM-31", manufactured by DKK-TOA CORPORATION).

The viscosity of the white ink is preferably in a range of 0.5 mPa s to 30 mPa s, more preferably in a range of 2 mPa·s to 20 mPa·s, preferably in a range of 2 mPa·s to 15 mPa·s, and still more preferably in a range of 3 mPa s to 10 mPa s. The viscosity can be measured at 25°C using a viscometer, for example, a TV-22 type viscometer (manufactured by Toki Sangyo Co., Ltd.).

From the viewpoint of setting the surface tension of the white ink to be less than the surface energy of the underlying layer, the surface tension thereof is preferably 50 mN/m or less and more preferably 40 mN/m or less. From the viewpoint of jettability, the lower limit of the surface tension of the white ink is preferably 30 mN/m or greater. The surface tension is measured at 25°C by a plate method using a surface tension meter, for example, an automatic surface tension meter (trade name, "CBVP-Z", manufactured by Kyowa Interface Science Co., Ltd.).

[Base ink]

The base ink prepared in the preparing step is not particularly limited as long as the base ink is an ink having a hue different from the hue of the white ink. Examples of the ink having a hue different from the hue of the white ink include an ink containing a colorant exhibiting a color other than white (for example, a black ink, a chromatic ink, or a metallic ink) and a colorless and transparent ink. As the colorless and transparent ink, an ink in which the content of the colorant is small is preferable, an ink in which the content proportion of the colorant in the amount of the solid content of the ink is less than 10% by mass is preferable, and an ink in which the content proportion thereof is less than 1% by mass is more preferable. The upper limit thereof is not particularly limited, but is, for example, greater than 0% by mass. Further, the colorless and transparent ink may contain no colorant. In this case, the content proportion of the colorant in the amount of the solid content of the ink is 0% by mass.

The base ink may be used alone or two or more kinds thereof.

From the viewpoint of improving the lamination strength, it is preferable that the first base ink containing an aggregating agent is prepared as the base ink in the preparing step. Further, it is preferable that a second base ink containing a colorant other than the white pigment is prepared as the base ink in order to obtain a desired color image.

The base ink to be prepared may be only the first base ink or only the second base ink, or may be both the first base ink and the second base ink. Further, the first base ink and the second base ink may each be used alone or two or more kinds thereof.

Hereinafter, preferable aspects of the first base ink and the second base ink will be described.

<<First base ink>>

The first base ink is an ink containing an aggregating agent.

As described below, the first base ink is preferably applied to the surface of the base material, and is also generally referred to as "pretreatment liquid".

(Aggregating agent)

The aggregating agent is not particularly limited as long as the aggregating agent is a component that aggregates the components in the ink applied to the surface of the first underlying layer formed of the first base ink. In a case where the white ink is applied to the surface of the first underlying layer, it is preferable that the aggregating agent is a component which aggregates the components in the white ink.

The aggregating agent contains preferably at least one selected from the group consisting of a polyvalent metal compound, an organic acid, a metal complex, and a cationic polymer and more preferably an organic acid.

- Polyvalent metal compound -

Examples of the polyvalent metal compound include salts of alkaline earth metals of a group 2 (such as magnesium and calcium) in the periodic table, transition metals of a group 3 (such as lanthanum) in the periodic table, metals of a group 13 (such as aluminum) in the periodic table, and lanthanides (such as neodymium).

As salts of these metals, salts of organic acids, a nitrate, a chloride, and a thiocyanate described below are preferable.

Among these, preferred examples of the polyvalent metal compound include a calcium salt or magnesium salt of an organic acid (such as formic acid, acetic acid, or a benzoic acid), a calcium salt or magnesium salt of nitric acid, calcium chloride, magnesium chloride, and a calcium salt or magnesium salt of thiocyanic acid.

Further, it is preferable that at least a part of the polyvalent metal compound is dissociated into polyvalent metal ions and counterions in the first base ink.

- Organic acid -

As the organic acid, an organic compound containing an acidic group is exemplified.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the aggregation rate of the ink, a phosphoric acid group or a carboxy group is preferable, and a carboxy group is more preferable as the acidic group.

Further, it is preferable that at least a part of the acidic group is dissociated in the first base ink.

Examples of the organic compound containing a carboxy group include (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of the aggregation rate of the ink, as the organic compound containing a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable, and malonic acid, malic acid, tartaric acid, succinic acid, glutaric acid, pimelic acid, adipic acid, or citric acid is more preferable. An aspect of using a combination of two or more kinds of these organic acids is also preferable.

It is preferable that the organic acid has a low pKa (for example, 1.0 to 5.0). In this manner, the surface charge of particles such as resin particles or the pigment stably dispersed in the ink by a weakly acidic functional group such as a carboxy group can be reduced by bringing the ink into contact with an organic acid having a lower pKa to degrade the dispersion stability.

It is preferable that the organic acid has a low pKa, high solubility in water, and a valence of divalent or higher. Further, it is more preferable that the organic acid has a high buffer capacity in a pH region with a pKa lower than the pKa of a functional group (for example, a carboxy group) that stably disperses particles in the ink.

- Metal complex -

It is preferable that the metal complex contains at least one selected from the group consisting of zirconium, aluminum, and titanium as a metal element.

As the metal complex, a metal complex including at least one selected from the group consisting of acetate, acetylacetonate, methylacetoacetate, ethylacetoacetate, octylene glycolate, butoxyacetylacetonate, lactate, a lactate ammonium salt, and triethanol aminate as a ligand is preferable.

The metal complex may be a commercially available product. Further, various organic ligands, particularly various multidentate ligands that are capable of forming metal chelate catalysts are commercially available. Accordingly, the metal complex may be a metal complex prepared by combining a commercially available organic ligand with a metal.

Examples of the metal complex include zirconium tetraacetyl acetonate (for example, "ORGATIX ZC-150", manufactured by Matsumoto Fine Chemical Co., Ltd.), zirconium monoacetyl acetonate (for example, "ORGATIX ZC-540", manufactured by Matsumoto Fine Chemical Co., Ltd.), zirconium bisacetyl acetonate (for example, "ORGATIX ZC-550", manufactured by Matsumoto Fine Chemical Co., Ltd.), zirconium monoethyl acetoacetate (for example, "ORGATIX ZC-560", manufactured by Matsumoto Fine Chemical Co., Ltd.), zirconium acetate (for example, "ORGATIX ZC-115", manufactured by Matsumoto Fine Chemical Co., Ltd.), titanium diisopropoxy bis(acetylacetonate) (for example, "ORGATIX TC-100", manufactured by Matsumoto Fine Chemical Co., Ltd.), titanium tetraacetyl acetonate (for example, "ORGATIX TC-401", manufactured by Matsumoto Fine Chemical Co., Ltd.), titanium dioctyloxy bis(octylene glycolate) (for example, "ORGATIX TC-200", manufactured by Matsumoto Fine Chemical Co., Ltd.), titanium diisopropoxy bis(ethylacetoacetate) (for example, "ORGATIX TC-750", manufactured by Matsumoto Fine Chemical Co., Ltd.), zirconium tetraacetyl acetonate (for example, "ORGATIX ZC-700", manufactured by Matsumoto Fine Chemical Co., Ltd.), zirconium tributoxy monoacetyl acetonate (for example, "ORGATIX ZC-540", manufactured by Matsumoto Fine Chemical Co., Ltd.), zirconium monobutoxy acetyl acetonate bis(ethylacetoacetate) (for example, "ORGATIX ZC-570", manufactured by Matsumoto Fine Chemical Co., Ltd.), zirconium dibutoxy bis(ethylacetoacetate) (for example, "ORGATIX ZC-580", manufactured by Matsumoto Fine Chemical Co., Ltd.), aluminum trisacetyl acetonate (for example, "ORGATIX AL-80", manufactured by Matsumoto Fine Chemical Co., Ltd.), titanium lactate ammonium salt (for example, "ORGATIX TC-300", manufactured by Matsumoto Fine Chemical Co., Ltd.), titanium lactate (for example, "ORGATIX TC-310, 315", manufactured by Matsumoto Fine Chemical Co., Ltd.), titanium triethanol aminate (for example, "ORGATIX TC-400", manufactured by Matsumoto Fine Chemical Co., Ltd.), and a zirconyl chloride compound (for example, "ORGATIX ZC-126", manufactured by Matsumoto Fine Chemical Co., Ltd.).

Among these, titanium lactate ammonium salt (for example, "ORGATIX TC-300", manufactured by Matsumoto Fine Chemical Co., Ltd.), titanium lactate (for example, "ORGATIX TC-310, 315", manufactured by Matsumoto Fine Chemical Co., Ltd.), titanium triethanol aminate (for example, "ORGATIX TC-400", manufactured by Matsumoto Fine Chemical Co., Ltd.), and a zirconyl chloride compound (for example, "ORGATIX ZC-126", manufactured by Matsumoto Fine Chemical Co., Ltd.) are preferable as the metal complex.

- Cationic polymer -

Further, the first base ink may be in the form of containing one or two or more kinds of cationic polymers as an aggregating component. It is preferable that the cationic polymer is a homopolymer of a cationic monomer containing a primary to tertiary amino group or a quaternary ammonium base, or a copolymer or a condensed polymer of a cationic monomer and a non-cationic monomer. The cationic polymer may be used in any form of a water-soluble polymer or water-dispersible latex particles.

Examples of the cationic polymer include a polyvinylpyridine salt, polyalkylaminoethyl acrylate, polyalkylaminoethyl methacrylate, polyvinylimidazole, polyethyleneimine, polybiguanide, polyguanide, polyallylamine, and derivatives thereof.

From the viewpoint of the viscosity of the first base ink, it is preferable that the weight-average molecular weight of the cationic polymer is small. In a case where the first base ink is applied to a recording medium by an inkjet recording method, the weight-average molecular weight of the cationic polymer is preferably in a range of 1,000 to 500,000, more preferably in a range of 1,500 to 200,000, and still more preferably in a range of 2,000 to 100,000. It is advantageous that the weight-average molecular weight thereof is 1,000 or greater from the viewpoint of aggregation rate. It is advantageous that the weight-average molecular weight thereof is 500,000 or less from the viewpoint of jetting reliability. However, in a case where the first base ink is applied to a recording medium by a method other than the ink jet recording method, the weight-average molecular weight thereof is not limited thereto.

The first base ink may contain only one or two or more kinds of aggregating agents.

The content of the aggregating agent is preferably in a range of 0.1% by mass to 40% by mass, more preferably in a range of 0.1% by mass to 30% by mass, still more preferably in a range of 1% by mass to 20% by mass, and particularly preferably in a range of 1% by mass to 10% by mass with respect to the total amount of the first base ink.

(Water)

It is preferable that the first base ink contains water. The content of water is not particularly limited, and is, for example, in a range of 40% by mass to 70% by mass with respect to the total amount of the first base ink.

(Other components)

The first base ink may contain other components in addition to the aggregating agent and water as necessary. Examples of the other components that can be contained in the first base ink include known additives such as an organic solvent, resin particles, a surfactant, a solid wetting agent, a colorant, colloidal silica, an inorganic salt, a fading inhibitor, an emulsification stabilizer, a penetration enhancer, an ultraviolet absorbing agent, a preservative, a fungicide, a pH adjuster, a viscosity adjuster, a rust inhibitor, a chelating agent, and a water-soluble polymer compound (for example, water-soluble polymer compounds described in paragraphs 0026 to 0080 of JP2013-001854A).

Further, in the first base ink, the content proportion of the colorant in the amount of the solid content of the first base ink is preferably less than 10% by mass and more preferably less than 1% by mass. The upper limit thereof is not particularly limited, but is, for example, greater than 0% by mass. In addition, the first base ink may contain no colorant. In this case, the content proportion of the colorant in the amount of the solid content of the ink is 0% by mass.

(Physical properties)

The pH of the first base ink is preferably in a range of 0.1 to 4.5 and more preferably in a range of 0.2 to 4.0 from the viewpoint of the aggregation rate of the ink. The pH can be measured at 25°C using a pH meter, for example, a pH meter (model number "HM-31", manufactured by DKK-TOA CORPORATION).

From the viewpoint of the aggregation rate of the ink, the viscosity of the first base ink is preferably in a range of 0.5 mPa s to 10 mPa s and more preferably in a range of 1 mPa s to 5 mPa·s. The viscosity is a value that can be measured at 25°C using a viscometer, for example, a TV-22 type viscometer (manufactured by Toki Sangyo Co., Ltd.).

From the viewpoint of setting the surface tension of the first base ink to be less than the surface energy of the base material, the surface tension of the first base ink is preferably 50 mN/m or less and more preferably 40 mN/m or less. From the viewpoint of jettability, the lower limit of the surface tension of the first base ink is preferably 30 mN/m or greater. The surface tension is measured at 25°C by a plate method using a surface tension meter, for example, an automatic surface tension meter (trade name, "CBVP-Z", manufactured by Kyowa Interface Science Co., Ltd.).

<<Second base ink>>

The second base ink is an ink containing a colorant other than the white pigment.

(Colorant)

The colorant contained in the second base ink is not particularly limited as long as the colorant is not the white pigment, and may be a pigment or a dye.

Among the examples, from the viewpoint of durability (for example, water resistance or light fastness), a pigment is preferable as the colorant. Hereinafter, the pigment other than the white pigment will be simply referred to as "color pigment".

The color pigment may be a chromatic pigment, a black pigment, or a combination of one or more kinds of chromatic pigments and one or more kinds of black pigments.

The chromatic pigment may be a pigment exhibiting a chromatic color, and the kind thereof is not particularly limited. The chromatic color denotes a color having a combination of hue, brightness, and chroma saturation.

The chromatic pigment is not particularly limited, and examples thereof include a cyan pigment, a magenta pigment, a yellow pigment, a blue pigment, a red pigment, a green pigment, an orange pigment, and a violet pigment.

Specific examples of the chromatic pigment include organic pigments such as an azo pigment, a disazo pigment, a condensed disazo pigment, a phthalocyanine pigment, a quinacridone pigment, a quinacridone quinone pigment, an anthraquinone pigment, an aminoanthraquinone pigment, an anthanthrone pigment, a dioxazine pigment, an indigo pigment, a thioindigo pigment, a perinone pigment, a perylene pigment, an isoindoline pigment, an isoindolinone pigment, an isoviolanthrone pigment, a benzimidazolone pigment, an indanthrone pigment, a triarylcarbonium pigment, and a diketopyrrolopyrrole pigment.

More specific examples of the chromatic pigment include a perylene pigment such as C.I. Pigment Red 190, C.I. Pigment Red 224, or C.I. Pigment Violet 29; a perinone pigment such as C.I. Pigment Orange 43 or C.I. Pigment Red 194; a quinacridone pigment such as C.I. Pigment Violet 19, C.I. Pigment Violet 42, C.I. Pigment Red 122, C.I. Pigment Red 192, C.I. Pigment Red 202, C.I. Pigment Red 207, or C.I. Pigment Red 209; a quinacridone quinone pigment such as C.I. Pigment Red 206, C.I. Pigment Orange 48, or C.I. Pigment Orange 49; an anthraquinone pigment such as C.I. Pigment Yellow 147; an anthanthrone pigment such as C.I. Pigment Red 168; a benzimidazolone pigment such as C.I. Pigment Brown 25, C.I. Pigment Violet 32, C.I. Pigment Orange 36, C.I. Pigment Yellow 120, C.I. Pigment Yellow 180, C.I. Pigment Yellow 181, C.I. Pigment Orange 62, or C.I. Pigment Red 185; a condensed disazo pigment such as C.I. Pigment Yellow 93, C.I. Pigment Yellow 94, C.I. Pigment Yellow 95, C.I. Pigment Yellow 128, C.I. Pigment Yellow 166, C.I. Pigment Orange 34, C.I. Pigment Orange 13, C.I. Pigment Orange 31, C.I. Pigment Red 144, C.I. Pigment Red 166, C.I. Pigment Red 220, C.I. Pigment Red 221, C.I. Pigment Red 242, Pigment Red 248, C.I. Pigment Red 262, or C.I. Pigment Brown 23; a disazo pigment such as C.I. Pigment Yellow 13, C.I. Pigment Yellow 83, or C.I. Pigment Yellow 188; an azo pigment such as C.I. Pigment Red 187, C.I. Pigment Red 170, C.I. Pigment Yellow 74, C.I. Pigment Yellow 150, C.I. Pigment Red 48, C.I. Pigment Red 53, C.I. Pigment Orange 64, or C.I. Pigment Red 247; an indanthrone pigment such as C.I. Pigment Blue 60; a phthalocyanine pigment such as C.I. Pigment Green 7, C.I. Pigment Green 36, C.I. Pigment Green 37, C.I. Pigment Green 58, C.I. Pigment Blue 16, C.I. Pigment Blue 75, or C.I. Pigment Blue 15; a triarylcarbonium pigment such as C.I. Pigment Blue 56 or C.I. Pigment Blue 61; a dioxazine pigment such as C.I. Pigment Violet 23 or C.I. Pigment Violet 37; an aminoanthraquinone pigment such as C.I. Pigment Red 177; a diketopyrrolopyrrole pigment such as C.I. Pigment Red 254, C.I. Pigment Red 255, C.I. Pigment Red 264, C.I. Pigment Red 272, C.I. Pigment Orange 71, or C.I. Pigment Orange 73; a thioindigo pigment such as C.I. Pigment Red 88; an isoindoline pigment such as C.I. Pigment Yellow 139 or Pigment Orange 66; an isoindolinone pigment such as Pigment Yellow 109 or C.I. Pigment Orange 61; a pyranthrone pigment such as C.I. Pigment Orange 40 or C.I. Pigment Red 216; and an isoviolanthrone pigment such as C.I. Pigment Violet 31.

The black pigment may be a pigment exhibiting a black color, and the kind thereof is not particularly limited. Examples of the black pigment include carbon black and titanium black.

The average particle diameter of the color pigment is preferably in a range of 10 nm to 200 nm, more preferably in a range of 10 nm to 150 nm, and still more preferably in a range of 10 nm to 110 nm. The color reproducibility is enhanced in a case where the average particle diameter is 200 nm or less, and the jetting stability is enhanced in a case where an image is recorded using an inkjet recording method. Further, the light resistance is enhanced in a case where the average particle diameter is 10 nm or greater. In addition, the particle size distribution of the pigment may be any of a wide particle size distribution or a monodispersed particle size distribution. Further, the average particle diameter and the particle size distribution of the pigment are determined by measuring the volume average particle diameter with a particle size distribution measuring device, for example, "NANOTRAC UPA-EX150" (trade name, manufactured by Nikkiso Co., Ltd.) using a dynamic light scattering method. Further, in a case where the pigment is coated with the pigment dispersing agent, the average particle diameter of the pigment denotes the average particle diameter of the pigment coated with the pigment dispersing agent.

From the viewpoints of the image density, the jettability, and the re-jettability, the content of the color pigment is preferably in a range of 1% by mass to 15% by mass and more preferably in a range of 2% by mass to 10% by mass with respect to the total amount of the second base ink.

(Organic solvent)

From the viewpoint of improving the jettability, it is preferable that the second base ink contains an organic solvent. Particularly, from the viewpoint of further improving the jettability, it is preferable that the second base ink does not contain an organic solvent having an SP value of 24 $MPa^{1/2}$ or less or the content of the organic solvent having an SP value of 24 $MPa^{1/2}$ or less is 5% by mass or less with respect to the total amount of the second base ink. The lower limit thereof is not particularly limited and is, for example, greater than 0% by mass.

In the present disclosure, the SP value is a value represented by the square root of the molecular aggregation energy and calculated by the method described in R. F. Fedors, Polymer Engineering Science, 14, pp. 147 to 154 (1974). The SP value is in units of $MPa^{1/2}$.

Hereinafter, examples of the organic solvents and the SP values thereof are described. The numerical values in parentheses are the SP values.

Propylene glycol (27.6 $MPa^{1/2}$)
Ethylene glycol (30.3 $MPa^{1/2}$)
Diethylene glycol (30.6 $MPa^{1/2}$)
Triethylene glycol (27.8 $MPa^{1/2}$)
Tripropylene glycol (24.7 $MPa^{1/2}$)
2-Methyl-1,3-butanediol (28.27 $MPa^{1/2}$)
1,2-Pentanediol (28.64 $MPa^{1/2}$)
1,5-Pentanediol (28.96 $MPa^{1/2}$)
1,2-Hexanediol (21.3 $MPa^{1/2}$)
1,6-Hexanediol (27.66 $MPa^{1/2}$)
Glycerin (33.5 $MPa^{1/2}$)
Dimethylformamide (30.62 $MPa^{1/2}$)
Methanol (28.17 $MPa^{1/2}$)
Isopropyl alcohol (28.69 $MPa^{1/2}$)
Triethanolamine (32.27 $MPa^{1/2}$)
Dipropylene glycol (27.1 $MPa^{1/2}$)
Ethylene glycol monoethyl ether (23.5 $MPa^{1/2}$)
Ethylene glycol monopropyl ether (21.8 $MPa^{1/2}$)
Ethylene glycol monobutyl ether (22.1 $MPa^{1/2}$)
Diethylene glycol monomethyl ether (22.98 $MPa^{1/2}$)
Diethylene glycol monoethyl ether (22.4 $MPa^{1/2}$)
Diethylene glycol monopropyl ether (21.9 $MPa^{1/2}$)
Diethylene glycol monobutyl ether (21.5 $MPa^{1/2}$)
Triethylene glycol monomethyl ether (22.1 $MPa^{1/2}$)
Triethylene glycol monoethyl ether (21.7 $MPa^{1/2}$)
Triethylene glycol monobutyl ether (21.1 $MPa^{1/2}$)

Propylene glycol monomethyl ether (23.0 MPa$^{1/2}$)
Propylene glycol monoethyl ether (22.3 MPa$^{1/2}$)
Propylene glycol monopropyl ether (21.8 MPa$^{1/2}$)
Propylene glycol monobutyl ether (21.4 MPa$^{1/2}$)
Dipropylene glycol monomethyl ether (21.3 MPa$^{1/2}$)
Dipropylene glycol monopropyl ether (20.69 MPa$^{1/2}$)
Dipropylene glycol monobutyl ether (20.45 MPa$^{1/2}$)
Dipropylene glycol t-butyl ether (19.98 MPa$^{1/2}$)
Tripropylene glycol monomethyl ether (20.4 MPa$^{1/2}$)
Diethylene glycol monohexyl ether (20.91 MPa$^{1/2}$)
Ethylene glycol mono-2-ethylhexyl ether (20.46 MPa$^{1/2}$)
Diethylene glycol mono-2-ethylhexyl ether (20.26 MPa$^{1/2}$)

The content of the organic solvent is preferably in a range of 10% by mass to 50% by mass and more preferably in a range of 20% by mass to 40% by mass with respect to the total amount of the second base ink.

(Water)

It is preferable that the second base ink contains water. The content of water is not particularly limited and is, for example, in a range of 40% by mass to 70% by mass with respect to the total amount of the second base ink.

(Pigment dispersing agent)

In a case where the second base ink contains a color pigment, it is preferable that the second base ink contains a pigment dispersing agent. Further, in a case where a self-dispersing pigment that can be dispersed in water even in the absence of a pigment dispersing agent is used as the color pigment, the second base ink may contain no pigment dispersing agent.
The form of the pigment dispersing agent is not particularly limited and may be any of a random polymer, a block polymer, or a graft polymer. Further, the pigment dispersing agent may be a polymer having a crosslinking structure. Among the forms, it is preferable that the pigment dispersing agent is a polymer having a crosslinking structure. It is considered that in a case where the pigment dispersing agent is a polymer having a crosslinking structure, the pigment dispersing agent is unlikely to be released from the surface of the color pigment.
In a case where the pigment dispersing agent contained in the second base ink is a polymer having a crosslinking structure, the preferable aspects of the polymer having a crosslinking structure are the same as the preferable aspects in a case where the pigment dispersing agent contained in the white ink is a polymer having a crosslinking structure.
The mixing ratio between the color pigment and the pigment dispersing agent is preferably in a range of 1:0.06 to 1:3, more preferably in a range of 1:0.125 to 1:2, and still more preferably in a range of 1:0.125 to 1:1.5 in terms of the mass.

(Resin particles)

From the viewpoint of improving the lamination strength of the image recorded material, it is preferable that the second base ink contains at least one kind of resin particles. It is preferable that the second base ink contains resin particles which are particles consisting of a resin, in addition to the pigment dispersing agent.
The preferable aspects of the resin particles contained in the second base ink are the same as the preferable aspects of the resin particles contained in the white ink.
In a case where the second base ink contains resin particles, the content of the resin particles is preferably in a range of 0.1% by mass to 15% by mass, more preferably in a range of 0.5% by mass to 10% by mass, still more preferably in a range of 1% by mass to 8% by mass, and even still more preferably in a range of 2% by mass to 6% by mass with respect to the total amount of the second base ink.

(Surfactant)

From the viewpoint of improving jetting stability, it is preferable that the second base ink contains at least one surfactant.
Examples of the surfactant include the same surfactants as the surfactants that can be contained in the white ink.
The content of the surfactant is preferably in a range of 0.05% by mass to 4.0% by mass, more preferably in a range of 0.1% by mass to 2.0% by mass, and still more preferably in a range of 0.5% by mass to 1.5% by mass with respect to the total amount of the second base ink.

(Additive)

The second base ink may contain additives such as a co-sensitizer, an ultraviolet absorbing agent, an antioxidant, a fading inhibitor, a conductive salt, and a basic compound, as necessary.

(Physical properties)

From the viewpoint of improving the jetting stability, the pH of the second base ink is preferably in a range of 7 to 10 and more preferably in a range of 7.5 to 9.5. The pH can be measured at 25°C using a pH meter, for example, a pH meter (model number "HM-31", manufactured by DKK-TOA CORPORATION).

The viscosity of the second base ink is preferably in a range of 0.5 mPa s to 30 mPa s, more preferably in a range of 2 mPa s to 20 mPa s, preferably in a range of 2 mPa s to 15 mPa·s, and still more preferably in a range of 3 mPa·s to 10 mPa·s. The viscosity can be measured at 25°C using a viscometer, for example, a TV-22 type viscometer (manufactured by Toki Sangyo Co., Ltd.).

From the viewpoint of setting the surface tension of the second base ink to be less than the surface energy of the base material or the first underlying layer, the surface tension of the second base ink is preferably 50 mN/m or less and more preferably 40 mN/m or less. Both the second base ink and the white ink have a surface tension of preferably 50 mN/m or less and more preferably 40 mN/m or less. From the viewpoint of the jettability, the lower limit of the surface tension of the second base ink is preferably 25 mN/m or greater and more preferably 30 mN/m or greater. The surface tension is measured at 25°C by a plate method using a surface tension meter, for example, an automatic surface tension meter (trade name, "CBVP-Z", manufactured by Kyowa Interface Science Co., Ltd.).

<Underlying layer forming step>

The image recording method according to the present disclosure includes a step of applying the base ink onto the base material to form an underlying layer.

Examples of a first aspect of the underlying layer forming step include an aspect in which at least one of the base inks is the first base ink. In this case, it is preferable that the underlying layer forming step includes a step of applying the first base ink onto the base material to form a first underlying layer. The first base ink may be applied to the surface of the base material, or another layer is formed on the base material and the first base ink may be applied to the surface of the layer. Since the first base ink contains an aggregating agent and has a function of aggregating the ink to be applied later, it is preferable that the first base ink is applied to the surface of the base material.

Examples of a second aspect of the underlying layer forming step include an aspect in which at least one of the base inks is the above-described second base ink. In this case, it is preferable that the underlying layer forming step includes a step of applying the second base ink onto the base material to form a second underlying layer. The second base ink may be applied to the surface of the base material, or another layer is formed on the base material and the second base ink may be applied to the surface of the layer. From the viewpoint of further improving the lamination strength, it is preferable that the second base ink is applied to the surface of the first underlying layer formed on the base material.

(Base material)

The kind of the base material is not particularly limited, and a known base material can be used. The base material may be a permeable base material or an impermeable base material.

For the purpose of obtaining a laminate, it is preferable that the base material is an impermeable base material.

In the present disclosure, the impermeability in the impermeable base material denotes a property that the water absorption rate in 24 hours which is measured in conformity with ASTM D570-98 (2018) is 2.5% or less. Here, the unit "%" of the water absorption rate is on a mass basis. The water absorption rate is preferably 1.0% or less and more preferably 0.5% or less.

Examples of the material of the impermeable base material include glass, a metal (such as aluminum, zinc, or copper), and a resin (such as polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, nylon, or an acrylic resin).

It is preferable that the material of the impermeable base material is a resin.

Examples of the material of the impermeable base material are as described above, but polypropylene, polyethylene, polyethylene terephthalate, nylon, an acrylic resin, or polyvinyl chloride is preferable from the viewpoint of versatility.

As the shape of the impermeable base material, a sheet-like (film-like) or a plate-like impermeable base material is preferable. Examples of the impermeable base material having such a shape include a glass plate, a metal plate, a resin sheet (resin film), paper on which plastic is laminated, paper on which a metal is laminated or vapor-deposited, and a plastic sheet (plastic film) on which a metal is laminated or vapor-deposited.

Examples of the impermeable base material made of a resin include a resin sheet (resin film), and more specific examples thereof include a flexible packaging material for packaging food or the like and a panel for guiding the floor of a mass retailer.

Examples of the impermeable base material include a textile (woven fabric) or non-woven fabric formed of impermeable fibers in addition to a sheet-like (film-like) or plate-like impermeable base material.

Further, the thickness of the impermeable base material is preferably in a range of 0.1 μm to 1,000 μm, more preferably in a range of 0.1 μm to 800 μm, and still more preferably in a range of 1 μm to 500 μm.

The base material may be subjected to a hydrophilization treatment. Examples of the hydrophilization treatment include a corona treatment, a plasma treatment, a flame treatment, a heat treatment, an abrasion treatment, a light irradiation treatment (such as a UV treatment), and a flame treatment, but the hydrophilization treatment is not limited thereto. The corona treatment can be performed using, for example, Corona Master (trade name, "PS-10S", manufactured by Shinko Electric & Instrumentation Co., Ltd.). The conditions for the corona treatment may be appropriately selected according to the kind of the base material and the like.

(Method of applying base ink)

A method of applying the base ink is not particularly limited, and examples thereof include known methods such as a coating method, a dipping method, and an ink jet recording method.

Examples of the coating method include known coating methods using a bar coater, an extrusion die coater, an air doctor coater, a blade coater, a rod coater, a knife coater, a squeeze coater, and a reverse roll coater.

In a case where the first base ink is used as the base ink, it is preferable that the first base ink is applied to the entire surface of the base material. Since the first base ink can be applied to the entire surface of the base material, a method of applying the first base ink may be any of a coating method, a dipping method, or an inkjet recording method.

In a case where the second base ink is used as the base ink, it is preferable that the second base ink is applied by an ink jet recording method from the viewpoint that a high-definition image can be recorded.

The method of jetting the ink in the inkjet recording method is not particularly limited, and any of known methods such as an electric charge control method of jetting an ink using an electrostatic attraction force, a drop-on-demand method (pressure pulse method) using a vibration pressure of a piezoelectric element, an acoustic ink jet method of jetting an ink using a radiation pressure by converting an electric signal into an acoustic beam and irradiating the ink with the acoustic beam, and a thermal inkjet (bubble jet (registered trademark)) method of heating an ink to form air bubbles and using the generated pressure may be used.

As the ink jet recording method, particularly, an ink jet recording method, described in JP1979-59936A (JP-S54-59936A), of jetting an ink from a nozzle using an action force caused by a rapid change in volume of the ink after being subjected to an action of thermal energy can be effectively used. Further, as the ink jet recording method, the method described in paragraphs 0093 to 0105 of JP2003-306623A can also be employed.

The application of the ink using the ink jet recording method is performed by jetting the ink from a nozzle of an inkjet head.

Examples of the ink jet recording method include a shuttle system of performing recording while scanning a short serial head in the width direction of a medium to be recorded and a line system of using a line head in which recording elements are aligned in correspondence with the entire area of one side of a medium to be recorded.

In the line system, image recording can be performed on the entire surface of the medium to be recorded by scanning the medium to be recorded in a direction intersecting the direction in which the recording elements are aligned. In the line system, a transport system such as a carriage that scans a short head in the shuttle system is not necessary. Further, in the line system, since movement of a carriage and complicated scanning control between the short head and the recorded medium are not necessary as compared with the shuttle system, only the recorded medium moves. Therefore, according to the line system, image recording at a higher speed than that of the shuttle system can be realized.

It is preferable that the application of the base ink is performed using an ink jet head having a resolution of 300 dpi or greater (more preferably 600 dpi or greater and still more preferably 800 dpi or greater). Here, dpi stands for dot per inch, and 1 inch is 2.54 cm.

From the viewpoint of obtaining a high-definition image, the liquid droplet amount of the base ink is preferably in a range of 1 picoliter (pL) to 10 pL and more preferably in a range of 1.5 pL to 6 pL. Further, from the viewpoints of improving the image unevenness and improving connection of continuous gradations, it is also effective that the ink is jetted by combining different liquid droplet amounts.

(Drying step)

It is preferable that the underlying layer forming step includes a step of heating and drying the base ink (hereinafter, also referred to as "drying step") after the application of the base ink.

Examples of the drying method in the drying step include known heating methods such as a heater, known air blowing methods such as a dryer, and methods of combining these methods.

Examples of the drying method in the drying step include a method of applying heat using a heater or the like from a side opposite to the surface of the base material to which the base ink has been applied; a method of applying warm air or hot air to the surface of the base material to which the base ink has been applied; a method of applying heat with an infrared heater from the surface of the base material to which the base ink has been applied or from a side opposite to the surface of the base material to which the base ink has been applied; and a method of combining these methods.

The heating temperature in the drying step is preferably 35°C or higher and more preferably 40°C or higher. The upper limit of the heating temperature is not particularly limited, but is preferably 100°C, more preferably 90°C, and still more preferably 70°C.

The heating time in the drying step is not particularly limited, but is preferably in a range of 0.5 seconds to 60 seconds, more preferably in a range of 0.5 seconds to 20 seconds, and still more preferably in a range of 0.5 seconds to 10 seconds.

Specifically, in a case where the first base ink is used as the base ink, it is preferable that a step of drying the first base ink is performed after the application of the first base ink.

The amount of the liquid components contained in the first underlying layer (hereinafter, also referred to as "residual amount of the liquid components") can be reduced by drying the first base ink after the application of the first base ink. In a case where the white ink is applied to the surface of the first underlying layer, the residual amount of the liquid components contained in the first underlying layer at the time point at which the step of forming the white ink layer is started (that is, at the time point at which the application of the white ink is started) is preferably 0.2 $g/m^2$ or less and more preferably 0.15 $g/m^2$ or less. Similarly, in a case where the second base ink is applied to the surface of the first underlying layer, the residual amount of the liquid components contained in the first underlying layer at the time point at which the application of the second base ink is started is preferably 0.2 $g/m^2$ or less and more preferably 0.15 $g/m^2$ or less. The lower limit of the residual amount of the liquid components contained in the first underlying layer is not particularly limited and is, for example, 0 $g/m^2$.

In a case where the residual amount of the liquid components contained in the first underlying layer is 0.2 $g/m^2$ or less, the adhesiveness to the ink layer (for example, the second underlying layer or the white ink layer) formed on the first underlying layer is improved, and as a result, the lamination strength is improved.

Further, in a case where the second base ink is used as the base ink, it is preferable that a step of drying the second base ink is performed after the application of the second base ink.

The residual amount of the liquid components contained in the second underlying layer can be reduced by drying the second base ink after the application of the second base ink. In a case where the white ink is applied to the surface of the second underlying layer, the residual amount of the liquid components contained in the second underlying layer at the time point at which the step of forming the white ink layer is started (that is, at the time point at which the application of the white ink is started) is preferably 0.2 $g/m^2$ or less, more preferably 0.15 $g/m^2$ or less, and still more preferably 0.1 $g/m^2$ or less. The lower limit of the residual amount of the liquid components contained in the second underlying layer is not particularly limited and is, for example, 0 $g/m^2$.

In a case where the residual amount of the liquid components contained in the second underlying layer is 0.2 $g/m^2$ or less, the adhesiveness to the ink layer (for example, the white ink layer) formed on the second underlying layer is improved, and as a result, the lamination strength is improved.

Here, the liquid components denote water and the organic solvent.

The residual amount of the liquid components is calculated by the following method.

The underlying layer is formed by drying the base ink after the application of the base ink onto the base material. After the underlying layer is formed, the base material in a state immediately before the white ink is applied is cut into a fixed size. The underlying layer is extracted with methanol. The amount of the organic solvent contained in the extracted liquid is measured by gas chromatography. The residual amount of the liquid components is measured by excluding the amount of methanol used for the extraction.

<White ink layer forming step>

The image recording method according to the present disclosure includes a step of applying the white ink to the surface of the underlying layer using an ink jet recording method to form a white ink layer. The details of the ink jet recording method are the same as the details of the ink jet recording method in the method of applying the base ink.

Examples of a first aspect of the white ink layer forming step include an aspect in which the white ink is applied to the surface of the first underlying layer. Here, the surface energy of the first underlying layer is preferably in a range of 40 mN/m to 90 mN/m, more preferably in a range of 45 mN/m to 85 mN/m, and still more preferably in a range of 45 mN/m to 55 mN/m. In a case where the surface energy of the first underlying layer is in the above-described ranges, the adhesiveness between the first underlying layer and the white ink layer is improved, and as a result, the lamination strength is improved.

Examples of a second aspect of the white ink layer forming step include an aspect in which the white ink is applied to the surface of the second underlying layer. Here, the surface energy of the second underlying layer is preferably in a range of 45 mN/m to 60 mN/m, more preferably in a range of 45 mN/m to 55 mN/m, and still more preferably in a range of 45 mN/m to 50 mN/m. In a case where the surface energy of the second underlying layer is in the above-described ranges, the adhesiveness between the second underlying layer and the white ink layer is improved, and as a result, the lamination strength is improved.

The surface energy of the white ink layer is preferably in a range of 40 mN/m to 60 mN/m and more preferably in a range of 45 mN/m to 55 mN/m. In a case where the surface energy of the white ink layer is in the above-described ranges, the adhesiveness between the white ink layer and the base material for lamination is improved, and as a result, the lamination strength is improved.

The surface energy is calculated by the Owens-Wendt method.

A specific method of calculating the surface energy of the underlying layer and the ink layer is as follows. Hereinafter, the method of calculating the surface energy of the underlying layer will be described, and the underlying layer will be replaced with the ink layer in the method of calculating the surface energy of the ink layer.

Immediately after the formation of the underlying layer on the base material is completed, the base material on which the underlying layer has been formed is cut out to obtain samples. For example, in a case where the drying step is carried out, the time point at which the formation of the underlying layer is completed denotes the time point at which the drying step is completed. In each of the cut-out samples, the contact angles of water and diiodomethane with respect to the surface of the underlying layer are measured using a contact angle meter within 30 minutes. As the contact angle meter, for example, "DM-501" (trade name, manufactured by Kyowa Interface Science Co., Ltd.) can be used.

The surface energy of the underlying layer is calculated by the Owens-Wendt method using measured values of the contact angles of water and diiodomethane with respect to the surface of the underlying layer and dispersive components and polar components of water and diiodomethane.

The Owens-Wendt Method is described in D. K. Owens and R. C. Wendt, Journal of applied polymer science Vol. 13, PP. 1741-1747, (1969).

Hereinafter, a specific calculation method will be described. In a case where a liquid is dropped on a solid surface (in this case, the underlying layer), each parameter at an interface of the solid surface and the liquid satisfies the following equations.

Equation 1 described below is known as the Young's equation.
Equation 2 described below is known as the Dupre equation.
Equation 3, Equation 4, and Equation 5 described below are known as equations using the Owens-Wendt method.

$$\gamma_S = \gamma_L \cos\theta + \gamma_{SL} \ \dots \ (1)$$

$$W = \gamma_S + \gamma_L - \gamma_{SL} \ \dots \ (2)$$

$$\gamma_S = \gamma_S{}^d + \gamma_S{}^h \ \dots \ (3)$$

$$\gamma_L = \gamma_L{}^d + \gamma_L{}^h \ \dots \ (4)$$

$$W = 2(\gamma_S{}^d \gamma_L{}^d)^{1/2} + 2(\gamma_S{}^h \gamma_L{}^h)^{1/2} \ \dots \ (5)$$

In Equation 1 to Equation 5, the details of each symbol are as follows.

$\theta$     contact angle of liquid with respect to surface of underlying layer
$\gamma_S$     surface energy of underlying layer

$\gamma_L$        surface energy of liquid
$\gamma_{SL}$       interface energy of underlying layer and liquid
W         work of adhesion
$\gamma_s^d$        dispersive component of surface energy of underlying layer
$\gamma_s^h$        polar component of surface energy of underlying layer
$\gamma_L^d$        dispersive component of surface energy of liquid
$\gamma_L h$       polar component of surface energy of liquid

Equation 6 described below is obtained from Equation 1 to Equation 5 described above.

$$(\gamma_S^d\gamma_L^d)^{1/2} + (\gamma_S^h\gamma_L^h)^{1/2} = \gamma_L(1 + \cos\theta)/2 \ldots (6)$$

Equation 6A and Equation 6B are established using water and diiodomethane as the liquid in Equation 6.

$$(\gamma_S^d\gamma_{L1}^d)^{1/2} + (\gamma_S^h\gamma_{L1}^h)^{1/2} = \gamma_{L1}(1 + \cos\theta1)/2 \ldots (6A)$$

$$(\gamma_S^d\gamma_{L2}^d)^{1/2} + (\gamma_S^h\gamma_{L2}^h)^{1/2} = \gamma_{L2}(1 + \cos\theta2)/2 \ldots (6B)$$

In Equation 6A and Equation 6B, the details of each symbol are as follows.

$\theta1$       contact angle of water with respect to surface of underlying layer
$\theta2$       contact angle of diiodomethane with respect to surface of underlying layer

$\gamma_{L1}$       surface energy (72.8 mN/m) of water
$\gamma_{L1}^d$       dispersive component (21.8 mN/m) of surface energy of water
$\gamma_{L1}^h$       polar component (51.0 mN/m) of surface energy of water
$\gamma_{L2}$       surface energy (50.8 mN/m) of diiodomethane
$\gamma_{L2}^d$       dispersive component (50.8 mN/m) of surface energy of diiodomethane
$\gamma_{L2}^h$       polar component (0 mN/m) of surface energy of diiodomethane

The values in parentheses are values described in the document.
$\theta1$, $\theta2$, $\gamma_{L1}$, $\gamma_{L1}^d$, $\gamma_{L1}^h$, $\gamma_{L2}$, $\gamma_{L2}^d$, and $\gamma_{L2}^h$ are substituted into Equation 6A and Equation 6B, whereby $\gamma_S^d$ and $\gamma_S^h$ are calculated.
As $\theta1$ and $\theta2$, the measured values by the above-described measurement method are used.
The calculated $\gamma_S^d$ and $\gamma_S^h$ are substituted into Equation 3, whereby the surface energy $\gamma_S$ of the underlying layer is calculated.

<Relationship between surface energy of underlying layer and surface tension of white ink>

In the image recording method according to the present disclosure, the surface energy of the underlying layer is greater than the surface tension of the white ink. In a case where the first underlying layer is formed on the base material and the white ink is applied to the surface of the first underlying layer, the surface energy of the first underlying layer is greater than the surface tension of the white ink. Further, in a case where the first underlying layer and the second underlying layer are formed in this order on the base material and the white ink is applied to the surface of the second underlying layer, the surface energy of the second underlying layer is greater than the surface tension of the white ink. The white ink is likely to wet and spread on the surface of the underlying layer, the adhesiveness between the underlying layer and the white ink layer is excellent, and as a result, an image recorded material with excellent lamination strength is obtained.
From the viewpoint of further improving the lamination strength, the difference between the surface energy of the underlying layer and the surface tension of the white ink is preferably in a range of 3 mN/m to 60 mN/m, more preferably in a range of 5 mN/m to 50 mN/m, still more preferably in a range of 8 mN/m to 30 mN/m, and particularly preferably in a range of 10 mN/m to 20 mN/m.
In a case where the first underlying layer is formed on the base material and the white ink is applied to the surface of the first underlying layer, the difference between the surface energy of the first underlying layer and the surface tension of the white ink is preferably in a range of 3 mN/m to preferably 60 mN/m, more preferably in a range of 5 mN/m to 50 mN/m, still more preferably in a range of 8 mN/m to 30 mN/m, and particularly preferably in a range of 10 mN/m to 20 mN/m.

In a case where the first underlying layer and the second underlying layer are formed in this order on the base material and the white ink is applied to the surface of the second underlying layer, the difference between the surface energy of the second underlying layer and the surface tension of the white ink is preferably in a range of 3 mN/m to 60 mN/m, more preferably in a range of 5 mN/m to 50 mN/m, still more preferably in a range of 7 mN/m to 25 mN/m, and particularly preferably in a range of 10 mN/m to 20 mN/m.

[Method of producing laminate]

According to the image recording method of the present disclosure, an image recorded material including a base material and an image recorded on the base material and having excellent lamination strength in a case where a base material for lamination is laminated on the image can be produced.

Therefore, the image recording method of the present disclosure is suitably used for producing a laminate including the above-described image recorded material and a base material for lamination which is laminated on a side of the image recorded material where the image is recorded.

A method of producing a laminate of the present disclosure includes a step of obtaining an image recorded material that includes a base material and an image disposed on the base material by the image recording method and a step of laminating a base material for lamination on a side of the image recorded material where the image has been disposed, to obtain a laminate.

According to the method of producing a laminate, which is a form of the present disclosure, a laminate having excellent lamination strength between the image recorded material and the base material for lamination can be produced.

The step of obtaining an image recorded material can refer to the image recording method of the present disclosure.

The step of obtaining a laminate is a step of laminating the base material for lamination on a side where the image has been recorded, to obtain a laminate.

It is preferable that the base material for lamination is a resin base material. The resin base material is not particularly limited, and examples thereof include a base material consisting of a thermoplastic resin.

A base material obtained by molding a thermoplastic resin in a sheet shape is exemplified as the resin base material.

It is preferable that the resin base material contains polypropylene, polyethylene terephthalate, nylon, polyethylene, or polyimide.

The shape of the resin base material is not particularly limited, but it is preferable that the resin base material has a sheet shape. The thickness of the resin base material is preferably in a range of 10 $\mu$m to 200 $\mu$m and more preferably in a range of 10 $\mu$m to 100 $\mu$m.

In the step of obtaining a laminate, the base material for lamination may be laminated directly or via another layer (for example, an adhesive layer), on a side where the image has been recorded.

In a case where the base material for lamination is laminated directly on a side where the image has been recorded, the lamination can be performed by a known method such as thermocompression bonding or thermal fusion welding.

Further, in a case where the base material for lamination is laminated on a side where the image has been recorded via an adhesive layer, the lamination can be performed, for example, by a method of coating the side where the image has been recorded with an adhesive, placing the base material for lamination, and bonding the image recorded material to the base material for lamination.

Further, in the case where the base material for lamination is laminated on a side where the image has been recorded via an adhesive layer, the lamination can also be performed by an extrusion lamination method (that is, sandwich lamination) or the like.

It is preferable that the adhesive layer contains an isocyanate compound. In a case where the adhesive layer contains an isocyanate compound, since the adhesiveness between the adhesive layer and the image is further improved, the lamination strength can be further improved.

Examples

Hereinafter, the present disclosure will be described in more detail based on examples, but the present disclosure is not limited to the following examples unless the gist thereof is overstepped.

[Preparation of first base ink (pretreatment liquid)]

In preparation of a first base ink, an aqueous dispersion liquid of resin particles A was prepared in advance.

- Preparation of aqueous dispersion liquid of resin particles A

3.0 g of sodium dodecyl benzene sulfonate (62 mass% aqueous solution, manufactured by Tokyo Chemical Industry Co., Ltd.) and 376 g of water were added to a 1,000 mL three-neck flask provided with a stirrer and a cooling pipe, and the solution was heated to 90°C in a nitrogen atmosphere. A solution A obtained by dissolving 11.0 g of a 50 mass% aqueous solution of sodium 2-acrylamido-2-methylpropane sulfonate (manufactured by Sigma-Aldrich Co., LLC) in 20 g of water, a solution B obtained by mixing 12.5 g of 2-hydroxyethyl methacrylate (manufactured by FUJIFILM Wako Pure Chemical Corporation), 5.0 g of 2-(2-ethoxyethoxy)ethyl acrylate (manufactured by Tokyo Chemical Industry Co., Ltd.), 17.0 g of benzyl acrylate (manufactured by Tokyo Chemical Industry Co., Ltd.), and 10.0 g of styrene (St, manufactured by FUJIFILM Wako Pure Chemical Corporation), and a solution C obtained by dissolving 6.0 g of sodium persulfate (manufactured by FUJIFILM Wako Pure Chemical Corporation) in 40 g of water were simultaneously added dropwise to the heated mixed solution in the three-neck flask over 3 hours. After completion of the dropwise addition, the resulting solution was allowed to further react for 3 hours, thereby obtaining 500 g of an aqueous dispersion liquid of the resin particles A (concentration of solid contents: 10.1% by mass).

The resin particles A were particles of an acrylic resin, and the glass transition temperature thereof was 26°C. Further, the weight-average molecular weight of the resin particles A was 69,000.

(First base ink P11)

The following components were mixed to prepare a first base ink P11.

- Aggregating agent: malonic acid (manufactured by FUJIFILM Wako Pure Chemical Corporation) ... 2% by mass
- Aggregating agent: glutaric acid (manufactured by FUJIFILM Wako Pure Chemical Corporation) ... 2% by mass
- Triisopropanolamine (TIPA, manufactured by FUJIFILM Wako Pure Chemical Corporation) ... 0.5% by mass
- Aqueous dispersion liquid of resin particles A ... 8% by mass in terms of solid

content amount of resin particles A

- 1,2-Propanediol (manufactured by FUJIFILM Wako Pure Chemical Corporation) ... 10% by mass
- Antifoaming agent (trade name "TSA-739", manufactured by Momentive Performance Materials Japan LLC, emulsion type silicone antifoaming agent) ... 0.01% by mass in terms of solid content amount of antifoaming agent
- Acetylene glycol-based surfactant (trade name "OLEFINE E1010", manufactured by Nissin Chemical Co., Ltd.) ... 0.5% by mass
- Water: remaining amount set such that total amount of first base ink reached 100% by mass

(First base ink P12)

1.0% by mass of a silicone-based surfactant (trade name "BYK-3450", manufactured by BYK-Chemie GmbH) was added to the composition of the first base ink P11 to reduce the content of water, thereby preparing a first base ink P12.

(First base ink P13)

0.5% by mass of a silicone-based surfactant (trade name "BYK-3450", manufactured by BYK-Chemie GmbH) was added to the composition of the first base ink P11 to reduce the content of water, thereby preparing a first base ink P13.

(First base ink P14)

A first base ink P14 was prepared by changing the acetylene glycol-based surfactant contained in the first base ink P11 to an acetylene glycol-based surfactant (trade name "E1020", manufactured by Nissin Chemical Co., Ltd.).

(First base ink P15)

A first base ink P15 was prepared by changing the acetylene glycol-based surfactant contained in the first base ink P11 to a wet dispersing agent (trade name "DISPERBYK-198", manufactured by BYK-Chemie GmbH).

[Preparation of second base ink]

Each component listed in Table 1 was mixed with water, thereby preparing second base inks C21 to C25 having a pigment concentration of 3% by mass. The content (% by mass) of each component is as listed in Table 1. Although the content of water is not listed in Table 1, the content of water is the remaining amount set such that the total content of the second base ink is 100% by mass.
The details of each component in Table 1 are as follows.

· Cyan pigment dispersion liquid: dispersion liquid in which cyan pigment (C.I. Pigment Blue 15:3) was dispersed by crosslinked polymer (trade name "APD4000 Cyan", pigment concentration: 20.0% by mass, manufactured by FUJIFILM Imaging Colorants Ltd.)

- PG: propylene glycol
- PGmME: propylene glycol monomethyl ether
- Aqueous dispersion liquid of resin particles: aqueous dispersion liquid of styrene-acrylic resin particles (trade name, "Neocryl A1091", concentration of solid contents: 45.0% by mass, manufactured by DSM)
- Acetylene glycol-based surfactant: trade name "OLEFINE E1010", manufactured by Nissin Chemical Co., Ltd.
- Silicone-based surfactant: trade name "BYK-3450", manufactured by BYK-Chemie GmbH
- Fluorine-based surfactant: trade name "Capstone FS-50", manufactured by DuPont de Nemours, Inc.)
- Colloidal silica: trade name "SNOWTEX XS", manufactured by Nissan Chemical Corporation, concentration of solid contents: 20% by mass

[Table 1]

|  | C21 | C22 | C23 | C24 | C25 |
|---|---|---|---|---|---|
| Cyan pigment dispersion liquid | 15 | 15 | 15 | 15 | 15 |
| PG | 26 | 22 | 26 | 26 | 26 |
| PGmME | - | 6 | - | - | - |
| Aqueous dispersion liquid of resin particles | 5 | 5 | 5 | 5 | 5 |
| Acetylene glycol-based surfactant | 0.5 | 0.5 | 0.5 | 0.5 | 0.5 |
| Silicone-based surfactant | 0.5 | - | - | 1 | - |
| Fluorine-based surfactant | - | 0.2 | - | - | 0.5 |
| Colloidal silica | 0.25 | 0.25 | 0.25 | 0.25 | 0.25 |
| Surface tension (mN/m) | 32.5 | 30.1 | 38.4 | 28.8 | 28.2 |

[Preparation of white ink]
In preparation of the white ink, a white pigment dispersion liquid was prepared in advance.

(Preparation of block polymer)

266 parts by mass of diethylene glycol dimethyl ether, 6.2 parts by mass of 2-iodo-2-cyanopropane, 120 parts by mass of methyl methacrylate (MMA), 28.8 parts by mass of acrylic acid (AA), 67.2 parts by mass of cyclohexyl methacrylate (CHMA), 7.9 parts by mass of azobisdimethylisovaleronitrile, and 0.7 parts by mass of 2-t-butyl-4,6-dimethylphenol were added to a reactor of a 1 L separable flask equipped with a stirrer, a backflow condenser, a thermometer, and a nitrogen introduction pipe, and the mixture was stirred while nitrogen was allowed to flow.
Next, the temperature of the mixture in the reactor was increased to 70°C, and the mixture was polymerized for 3 hours, thereby obtaining a polymerization solution A containing an MMA/AA/CHMA copolymer.
After 3 hours, as a result of sampling a part of the polymerization solution A and measuring the solid content, the solid content was 42.0% by mass, and thus it was confirmed that most of the monomers were polymerized.
Further, in a case where the weight-average molecular weight (Mw) of the MMA/AA/CHMA copolymer was measured by GPC, the weight-average molecular weight (Mw) was 7,500.
The acid value of the MMA/AA/CHMA copolymer was 101.0 mgKOH/g.
Next, a mixture of 35.2 parts by mass of benzyl methacrylate (BzMA) and 0.3 parts by mass of 2,2'-azobis(2,4-dimethylvaleronitrile) (trade name "V-65", manufactured by FUJIFILM Wako Pure Chemical Corporation) was added to the polymerization solution A, and the solution was polymerized at 70°C for 3 hours, thereby obtaining a polymerization solution B containing a block polymer 1.

Here, the block polymer 1 is a block polymer containing an A block which is an MMA/AA/CHMA copolymer and a B block which is a BzMA homopolymer.

As a result of measurement of the solid content in the obtained polymerization solution B, the solid content thereof was 43.2% by mass and it was confirmed that most of the monomers were polymerized.

Further, the Mw of the block polymer 1 was 8,500, and the acid value thereof was 89.3 mgKOH/g. The block polymer 1 was defined as a pigment dispersing agent.

<Preparation of white pigment dispersion liquid>

136.4 parts by mass of the polymerization solution B containing the block polymer 1, 163.6 parts by mass of butyl carbitol, and 450 parts by mass of C.I. Pigment White 6 (trade name, "JR-405", manufactured by Tayca Corporation, titanium dioxide particles) as a white pigment were blended with each other and stirred with a disper. Next, the white pigment was sufficiently dispersed using a horizontal media disperser, thereby obtaining an oil-based pigment dispersion liquid. The average particle diameter of the white pigment dispersed in the oil-based pigment dispersion liquid was 290 nm. The viscosity (25°C) of the oil-based pigment dispersion liquid was 86.3 mPa s.

Next, a mixed solution consisting of 4.0 parts by mass of potassium hydroxide and 341 parts by mass of water was gradually added to 700 parts by mass of the oil-based pigment dispersion liquid while being stirred using a disper, and the solution was neutralized. Thereafter, the white pigment was sufficiently dispersed using a horizontal media disperser, thereby obtaining a pigment dispersion liquid.

Next, ultrafiltration was performed by allowing ion exchange water to flow through the obtained pigment dispersion liquid at a flow rate of 600 mL per minute using an ultrafiltration device (cross-flow type ultrafilter (UF), manufactured by Sartorius AG). The liquid temperature was maintained at 25°C, and the ultrafiltration was performed ten times by setting one time the volume of the charged liquid to once. Ion exchange water was added thereto, thereby obtaining a white pigment dispersion liquid 1 in which the pigment concentration was 45% by mass and the concentration of the pigment dispersing agent was 3.7% by mass.

The components listed in Table 2 were mixed with water, thereby preparing white inks W1 to W5 having a pigment concentration of 14% by mass. The content (% by mass) of each component is as listed in Table 2. Although the content of water is not listed in Table 2, the content of water is the remaining amount set such that the total content of the white ink is 100% by mass.

The details of each component in Table 2 are as follows. The description of the components common to the components listed in Table 1 will not be repeated.

· PGmPE: propylene glycol monopropyl ether

[Table 2]

|  | W1 | W2 | W3 | W4 | W5 |
|---|---|---|---|---|---|
| White pigment dispersion liquid | 31.1 | 31.1 | 31.1 | 31.1 | 31.1 |
| PG | 25 | 25 | 35 | 25 | 25 |
| PGmME | 1 | 1 | 1 | 1 | 1 |
| PGmPE | 1 | 1 | 1 | 1 | 1 |
| Aqueous dispersion liquid of resin particles | 3 | 3 | 3 | 3 | 3 |
| Acetylene glycol-based surfactant | 0.5 | 0.5 | 0.5 | 1 | 1 |
| Silicone-based surfactant | 0.5 |  | 0.5 | 0.5 | 1 |
| Fluorine-based surfactant | - | - | - | - | 0.5 |
| Colloidal silica | 0.25 | 0.25 | 0.25 | 0.25 | 0.25 |
| Surface tension (mN/m) | 37 | 45 | 37 | 34 | 30 |

[Examples 1 to 14 and Comparative Examples 1 and 2]

<Image recording>

A polyethylene terephthalate (PET) base material (trade name, "FE2001", manufactured by Futamura Chemical Co., Ltd., thickness of 12 μm, width of 100 mm, length of 240 mm) was prepared as an impermeable base material (hereinafter, also simply referred to as "base material".

An image recording device including a transport mechanism for transporting the base material, and a wire bar coater for applying the first base ink, a first ink jet head for applying the second base ink, and a second inkjet head for applying the white ink in this order from the upstream side in the transport direction of the base material was prepared.

As both the first ink jet head and the second ink jet head, 1,200 dpi/20 inch-width piezo full line heads were used. Here, dpi is an abbreviation for dot per inch.

Both the first ink jet head and the second ink jet head were line heads in which the heads were arranged in a direction (that is, the width direction of the base material) orthogonal to the transport direction of the base material.

As each of the above-described ink jet heads, Samba (registered trademark) G3L (manufactured by FUJIFILM DIMATIX) was used.

The base material, the first base ink, the second base ink, and the white ink were set in the image recording device.

(Examples 1 to 9 and Comparative Example 1)

In Examples 1 to 9 and Comparative Example 1, the first base ink, the second base ink, and the white ink were applied in this order onto the base material, thereby obtaining an image recorded material. The specific method is as follows.

The first base ink was applied onto the base material using a wire bar coater while the base material was allowed to move at a constant speed of 50 m/min. The mass of the first base ink applied was set to 2.0 g/m$^2$.

The first base ink was dried by blowing warm air at 60°C and a wind speed of 22 m/sec for 3 seconds using a dryer one second after the time point at which the application of the first base ink was completed, thereby forming a first underlying layer on the base material.

The second base ink was applied to the surface of the first underlying layer in the form of a solid image while the base material on which the first underlying layer was formed was allowed to move at a constant speed of 50 m/min, thereby forming a second underlying layer. The white ink was applied to the surface of the second underlying layer in the form of a solid image to form a white ink layer. The second base ink and the white ink were jetted under the conditions of a resolution of 1,200 dpi × 1,200 dpi and a jet frequency of 39.37 kHz.

In Example 5, the second base ink was dried by blowing drying air at 120°C and a wind speed of 100 m/sec for 45 seconds on a hot plate at 65°C using a dryer after the application of the second base ink. In other examples and Comparative Example 1, the same drying was not carried out.

(Examples 10 to 14 and Comparative Example 2)

In Examples 10 to 14 and Comparative Example 2, the first base ink and the white ink were applied in this order onto the base material, thereby obtaining an image recorded material. The specific method is as follows.

The first base ink was applied onto the base material using a wire bar coater while the base material was allowed to move at a constant speed of 50 m/min. The mass of the first base ink applied was set to 2.0 g/m$^2$.

The first base ink was dried by blowing warm air at 60°C and a wind speed of 22 m/sec for 3 seconds using a dryer one second after the time point at which the application of the first base ink was completed, thereby forming a first underlying layer on the base material.

In Example 13, the drying was carried out by changing the wind speed of warm air to 10 m/sec.

The white ink was applied to the surface of the first underlying layer in the form of a solid image while the base material on which the first underlying layer was formed was allowed to move at a constant speed of 50 m/min, thereby forming a white ink layer. The white ink was jetted under the conditions of a resolution of 1,200 dpi × 1,200 dpi and a jet frequency of 39.37 kHz.

A laminate was prepared using the obtained image recorded material, and the lamination strength was evaluated. Further, the continuous jettability of the second base ink was evaluated. The evaluation method is as follows.

<Lamination strength>

A region having a length of 200 mm and a width of 100 mm (hereinafter, also referred to as a lamination strength evaluation region) in which the solid image was provided on the entire surface was cut out from the image recorded material and used as a lamination strength evaluation sample.

The solid image in the lamination strength evaluation sample was coated with an adhesive for dry lamination (main agent TM-320 (isocyanate compound)/curing agent CAT-13B (alcohol compound), manufactured by Toyo-Morton, Ltd.) using a bar coater and dried at 70°C for 10 seconds. Further, an unstretched polypropylene film (CPP) film (trade name: PYLEN P1128, manufactured by Toyobo Co., Ltd., thickness of 25 μm) was laminated as the base material for lamination. In this state, the base material for lamination and the lamination strength evaluation sample were attached to each other, thereby obtaining a laminate. The obtained laminate was aged at 40°C for 48 hours.

A sample piece having a length of 100 mm and a width of 15 mm was cut out from the aged laminate.

Next, the base material for lamination and the lamination strength evaluation sample in a region from the one end in the longitudinal direction to a length of 30 mm in the sample piece were peeled by hand. The remaining region with a length of 70 mm was allowed to remain in a state where the base material for lamination and the lamination strength evaluation sample were attached to each other.

Next, a tensile test of stretching the peeled portion of the base material for lamination and the peeled portion of the lamination strength evaluation sample in opposite directions in the sample piece was performed. The stretching direction was a direction perpendicular to the above-described remaining region with a length of 70 mm (the remaining region in a state where the base material for lamination and the lamination strength evaluation sample were attached to each other).

The peel strength for peeling the base material for lamination and the sample for evaluating the lamination strength in the remaining region with a length of 70 mm was determined by performing the tensile test, and the obtained peel strength was set as the lamination strength.

Further, the tensile test was performed at 25°C using a tensile tester (trade name, "TENSILON RTM-25", manufactured by Orientec Co., Ltd.).

The evaluation standards are as follows.

AA: The lamination strength was 2.0 N/15 mm or greater.

A: The lamination strength was 1.5 N/15 mm or greater and less than 2.0 N/15 mm.
B: The lamination strength was 1.0 N/15 mm or greater and less than 1.5 N/15 mm.
C: The lamination strength was 0.5 N/15 mm or greater and less than 1.0 N/15 mm.
D: The lamination strength was less than 0.5 N/15 mm.

<Continuous j ettability>

Samba G3L (manufactured by FUJIFILM DIMATIX) was used as the inkjet head.

The obtained second base ink was continuously jetted from 2,048 nozzles of the ink jet head for 45 minutes under the conditions of a liquid droplet amount of 2 pL and a jet frequency of 24 kHz. It was confirmed that the ink was jetted from all the 2,048 nozzles at the start of jetting.

After completion of the continuous jetting, the number of nozzles (number of jetting nozzles) in which the ink was jetted to the end without clogging was counted. The ink jetting ratio was calculated by the following equation based on the number of jetting nozzles. The continuous jettability was evaluated based on the ink jetting ratio. The evaluation standards are as follows.

$$\text{Ink jetting ratio (\%)} = (\text{number of jetting nozzles/total number of nozzles}) \times 100$$

In the equation, the total number of nozzles is 2,048.

A: The ink jetting ratio was 98% or greater.
B: The ink jetting ratio was 92% or greater and less than 98%.
C: The ink jetting ratio was less than 92%.

The evaluation results are listed in Table 3.

Table 3 shows the kinds of the first base ink, the second base ink, and the white ink used in each example and each comparative example. Further, the surface tensions (unit: mN/m) of the second base ink and the white ink, and the surface energies (unit: mN/m) of the underlying layer and the white ink layer are listed. In a case where the surface tension of the white ink is defined as W and the surface energy of the underlying layer is defined as E0, "E0 - W" (unit: mN/m) denotes a value obtained by subtracting the surface tension of the white ink from the surface energy of the underlying layer. Further, "residual amount of liquid components at start of application of white ink" denotes the residual amount (unit: g/m$^2$) of the liquid components at the time point at which the application of the white ink was started.

[Table 3]

| | First base ink | Second base ink | | | White ink | | Underlying layer | E0-W | White ink layer | Residual amount of liquid components at start of application of white ink | Evaluation | |
|---|---|---|---|---|---|---|---|---|---|---|---|---|
| | Type | Type | Content of specific solvent | Surface tension | Type | Surface tension W | Surface energy E0 | | Surface energy Ew | | Lamination strength | Continuous jettability |
| Example 1 | P11 | C21 | 0 | 32.5 | W1 | 37 | 54 | 17 | 54 | 0.13 | A | A |
| Example 2 | P11 | C22 | 6 | 30.1 | W1 | 37 | 54 | 17 | 54 | 0.15 | A | B |
| Example 3 | P11 | C21 | 0 | 32.5 | W2 | 45 | 54 | 9 | 55 | 0.13 | B | A |
| Example 4 | P11 | C23 | 0 | 38.4 | W1 | 37 | 60 | 23 | 54 | 0.13 | B | B |
| Example 5 | P11 | C21 | 0 | 32.5 | W1 | 37 | 47 | 10 | 54 | 0.09 | AA | A |
| Example 6 | P11 | C21 | 0 | 32.5 | W3 | 37 | 54 | 17 | 57 | 0.13 | B | A |
| Example 7 | P11 | C21 | 0 | 32.5 | W4 | 34 | 54 | 20 | 46 | 0.13 | A | A |
| Example 8 | P11 | C21 | 0 | 32.5 | W5 | 30 | 54 | 24 | 42 | 0.13 | B | A |
| Example 9 | P11 | C24 | 0 | 28.8 | W1 | 37 | 44 | 7 | 54 | 0.13 | B | A |
| Example 10 | P11 | - | - | - | W1 | 37 | 60 | 23 | 54 | 0.01 | B | - |
| Example 11 | P13 | - | - | - | W1 | 37 | 47 | 10 | 54 | 0.01 | A | - |
| Example 12 | P14 | - | - | - | W1 | 37 | 88 | 51 | 54 | 0.01 | B | - |
| Example 13 | P11 | - | - | - | W1 | 37 | 55 | 18 | 54 | 0.03 | A | - |
| Example 14 | P15 | - | - | - | W1 | 37 | 42 | 5 | 54 | 0.01 | B | - |
| Comparative Example 1 | P11 | C25 | 0 | 28.2 | W1 | 37 | 37 | 0 | 54 | 0.13 | D | A |
| Comparative Example 2 | P12 | - | - | - | W1 | 37 | 33 | -4 | 54 | 0.13 | D | - |

As listed in Table 3, it was found that since the methods of Examples 1 to 14 included a step of preparing a white ink and a base ink, a step of applying the base ink onto a base material to form an underlying layer, and a step of applying the white ink to the surface of the underlying layer using an ink jet recording method to form a white ink layer, and the surface energy of the underlying layer was greater than the surface tension of the white ink, an image having excellent lamination strength with respect to the base material for lamination was recorded.

On the contrary, it was found that since the surface energy of the underlying layer was the same as the surface tension of the white ink in Comparative Example 1 and the surface energy of the underlying layer was less than the surface tension of the white ink in Comparative Example 2, the lamination strength was degraded.

In Example 13, it was found that since the white ink was applied to the surface of the first underlying layer and the surface energy of the first underlying layer was 85 mN/m or less, the lamination strength was excellent as compared with Example 12.

In Example 11, it was found that since the white ink was applied to the surface of the first underlying layer and the surface energy of the first underlying layer was 45 mN/m or greater, the lamination strength was excellent as compared with Example 14.

In Example 5, it was found that since the white ink was applied to the surface of the second underlying layer and the surface energy of the second underlying layer was 45 mN/m or greater, the lamination strength was excellent as compared with Example 9.

In Example 5, it was found that since the white ink was applied to the surface of the second underlying layer and the surface energy of the second underlying layer was 55 mN/m or less, the lamination strength was excellent as compared with Example 4.

It was found that since the method of Example 5 included a step of drying the second base ink after the application of the second base ink and before the application of the white ink, the lamination strength was excellent as compared with Example 1.

In Example 1, it was found that since the content of the organic solvent having an SP value of 24 MPa$^{1/2}$ or less in the second base ink was 5% by mass or less, the continuous jettability was excellent as compared with Example 2.

In Example 5, it was found that since the residual amount of the liquid components contained in the underlying layer was 0.1 g/m$^2$ or less at the time point at which the step of forming the white ink layer was started, the lamination strength was excellent as compared with Example 1.

In Example 1, it was found that since the difference between the surface energy of the underlying layer and the surface tension of the white ink was 10 mN/m or greater, the lamination strength was excellent as compared with Example 3.

In Example 7, it was found that since the difference between the surface energy of the underlying layer and the surface tension of the white ink was 20 mN/m or less, the lamination strength was excellent as compared with Example 8.

In Example 7, it was found that since the surface energy of the white ink layer was 45 mN/m or greater, the lamination strength was excellent as compared with Example 8.

In Example 7, it was found that since the surface energy of the white ink layer was 55 mN/m or less, the lamination strength was excellent as compared with Example 6.

**Claims**

1. An image recording method comprising:

   a step of preparing a white ink containing a white pigment and at least one base ink having a hue different from a hue of the white ink;
   a step of applying the base ink onto a base material to form an underlying layer; and
   a step of applying the white ink to a surface of the underlying layer using an ink jet recording method to form a white ink layer,
   wherein a surface energy of the underlying layer is greater than a surface tension of the white ink.

2. The image recording method according to claim 1,

   wherein at least one of base inks is a first base ink containing an aggregating agent,
   the step of forming the underlying layer includes a step of applying the first base ink onto the base material to form a first underlying layer,
   the step of forming the white ink layer includes a step of applying the white ink to a surface of the first underlying layer using the ink jet recording method, and

a surface energy of the first underlying layer is in a range of 45 mN/m to 85 mN/m.

3. The image recording method according to claim 1 or 2,

wherein at least one of base inks is a second base ink containing a colorant other than the white pigment,
the step of forming the underlying layer includes a step of applying the second base ink onto the base material to form a second underlying layer,
the step of forming the white ink layer includes a step of applying the white ink to a surface of the second underlying layer using the ink jet recording method, and
a surface energy of the second underlying layer is in a range of 45 mN/m to 55 mN/m.

4. The image recording method according to claim 3,
wherein both the second base ink and the white ink have a surface tension of 40 mN/m or less.

5. The image recording method according to claim 3 or 4,

wherein the step of forming the underlying layer and the step of forming the white ink layer are performed in this order, and
the step of forming the underlying layer further includes a step of drying the second base ink.

6. The image recording method according to any one of claims 3 to 5,
wherein the second base ink does not contain an organic solvent having an SP value of 24 $MPa^{1/2}$ or less or a content of the organic solvent having an SP value of 24 $MPa^{1/2}$ or less is greater than 0% by mass and 5% by mass or less with respect to a total amount of the second base ink.

7. The image recording method according to any one of claims 1 to 6,
wherein a residual amount of a liquid component contained in the underlying layer is 0.1 $g/m^2$ or less at a time point at which the step of forming the white ink layer is started.

8. The image recording method according to any one of claims 1 to 7,
wherein a difference between the surface energy of the underlying layer and the surface tension of the white ink is in a range of 10 mN/m to 20 mN/m.

9. The image recording method according to any one of claims 1 to 8,
wherein a surface energy of the white ink layer is in a range of 45 mN/m to 55 mN/m.

10. A method of producing a laminate comprising:

a step of obtaining an image recorded material which includes the base material and an image disposed on the base material using the image recording method according to any one of claims 1 to 9; and
a step of laminating a base material for lamination on a side of the image recorded material where the image is disposed to obtain a laminate.

| | | |
|---|---|---|
| **INTERNATIONAL SEARCH REPORT** | International application No. | |
| | **PCT/JP2022/046032** | |

**A.    CLASSIFICATION OF SUBJECT MATTER**

***B41M 5/00***(2006.01)i; ***C09D 11/322***(2014.01)i; ***C09D 11/54***(2014.01)i
FI:    B41M5/00 132; B41M5/00 120; B41M5/00 134; C09D11/322; C09D11/54

According to International Patent Classification (IPC) or to both national classification and IPC

**B.    FIELDS SEARCHED**

Minimum documentation searched (classification system followed by classification symbols)

B41M5/00; C09D11/322; C09D11/54

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2021-70239 A (SEIKO EPSON CORP.) 06 May 2021 (2021-05-06)<br>paragraphs [0075]-[0117], [0161]-[0194] | 1, 2, 6-10 |
| Y | JP 2016-7737 A (MIMAKI ENGINEERING CO., LTD.) 18 January 2016 (2016-01-18)<br>paragraphs [0037]-[0079] | 1, 3-10 |
| Y | WO 2012/133667 A1 (DAINIPPON TORYO CO., LTD.) 04 October 2012 (2012-10-04)<br>paragraphs [0023], [0033] | 1-10 |
| Y | JP 2012-140615 A (HITACHI MAXELL LTD.) 26 July 2012 (2012-07-26)<br>paragraph [0065] | 1-10 |
| Y | JP 2021-155556 A (SEIKO EPSON CORP.) 07 October 2021 (2021-10-07)<br>paragraph [0253] | 10 |
| A | US 2014/0118449 A1 (SARKISIAN et al.) 01 May 2014 (2014-05-01)<br>paragraphs [0012]-[0044], [0064]-[0069] | 1-10 |

☐ Further documents are listed in the continuation of Box C.       ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **20 January 2023** | **07 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/046032**

| Patent document cited in search report | | | Publication date (day/month/year) | Patent family member(s) | | | Publication date (day/month/year) |
|---|---|---|---|---|---|---|---|
| JP | 2021-70239 | A | 06 May 2021 | US<br>paragraphs [0090]-[0133],<br>[0179]-[0252] | 2021/0129569 | A1 | |
| JP | 2016-7737 | A | 18 January 2016 | US<br>paragraphs [0045]-[0094]<br>CN | 2015/0367655<br>105291598 | A1<br>A | |
| WO | 2012/133667 | A1 | 04 October 2012 | US<br>paragraphs [0044], [0055]<br>CN | 2014/0004369<br>103442813 | A1<br>A | |
| JP | 2012-140615 | A | 26 July 2012 | (Family: none) | | | |
| JP | 2021-155556 | A | 07 October 2021 | (Family: none) | | | |
| US | 2014/0118449 | A1 | 01 May 2014 | EP<br>CN | 2718110<br>103534099 | A4<br>A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009083325 A
- JP 2016188345 A
- WO 2013180074 A
- JP 2013001854 A
- JP 54059936 A
- JP S5459936 A
- JP 2003306623 A

**Non-patent literature cited in the description**

- **R. F. FEDORS.** *Polymer Engineering Science,* 1974, vol. 14, 147-154
- **D. K. OWENS ; R. C. WENDT.** *Journal of applied polymer science,* 1969, vol. 13, 1741-1747